# EUROPÄISCHE PATENTSCHRIFT

(11) **EP 4 215 944 B1**
(45) Veröffentlichungstag und Bekanntmachung des Hinweises auf die Patenterteilung: **28.02.2024**
(21) Anmeldenummer: 22207066.6
(22) Anmeldetag: 11.11.2022
(51) Int. Cl.: G01S 17/48, G01S 17/04

(54) **OPTOELEKTRONISCHER SENSOR UND VERFAHREN ZUM ERFASSEN EINES OBJEKTS**
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(30) Priorität: 25.01.2022 DE 102022101680
(43) Veröffentlichungstag der Anmeldung: 26.07.2023
(73) Patentinhaber: SICK AG, 79183 Waldkirch (DE)
(72) Erfinder: Imhof, Andreas, 79114 Freiburg (DE); Merettig, Gerhard, 79350 Sexau (DE); Schäfer, Stefan, 79379 Müllheim (DE)

(56) Entgegenhaltungen:
- DE-A1-102006 005 463
- DE-A1-102010 038 186
- DE-A1-102018 129 972
- DE-C2- 19 721 105

## Beschreibung

Die Erfindung betrifft einen optoelektronischen Sensor und ein Verfahren zum Erfassen eines Objekts in einem Überwachungsbereich nach dem Oberbegriff von Anspruch 1 beziehungsweise 13.

In einer verbreiteten Familie optoelektronischer Sensoren sind Lichtsender und Lichtempfänger für eine Erfassung nach dem Triangulationsprinzip nebeneinander angeordnet. Der von einem angetasteten Objekt erzeugte Empfangslichtfleck wandert in Abhängigkeit des Objektabstands auf dem Empfängerelement. Die Position des Empfangslichtflecks stellt somit ein Maß für den Objektabstand dar. Ein abstandsmessender Sensor nach dem Triangulationsprinzip gibt diesen Objektabstand als Messgröße aus. Für die erforderliche Ortsauflösung sind Sensoren nach dem Triangulationsprinzip üblicherweise mit einem Zeilensensor ausgerüstet, der eine große Anzahl von Lichtempfangselementen oder Pixeln aufweist.

Eine Unterklasse bilden die hintergrundausblendenden Lichttaster. Hier wird die Anwesenheit von Objekten erkannt und ein entsprechendes binäres Schaltsignal ausgegeben. Dabei wird das Triangulationsprinzip ausgenutzt, um mit einem zumindest in einen Nah- und einen Fernbereich ortsauflösenden Lichtempfänger zwei Empfangssignale zu erzeugen. Deren Differenz wird mit einer Schaltschwelle nahe oder gleich Null bewertet, um so die Objekterfassung auf einen bestimmten Entfernungsbereich zu beschränken und Empfangssignale von Objekten außerhalb dieses Entfernungsbereichs als Hintergrundsignal auszublenden. Ein hintergrundausblendender Lichttaster ist beispielsweise in der DE 197 21 105 C2 offenbart, wobei hier Schalter vorgesehen sind, um die einzelnen Elemente eines ortsauflösenden Lichtempfängers auf veränderliche Weise dem Nah- oder Fernbereich zuzuordnen. Aus der DE 10 2010 038 186 A1 ist ein weiterer hintergrundausblendender Lichttaster bekannt, der anstelle eines punktförmigen Lichtsenders eine Linienanordnung von mehreren Einzelemittern einsetzt.

Die DE 10 2006 005 463 A1 offenbart eine optoelektronische Vorrichtung mit einer Triangulationsanordnung von Sender und Empfänger. Der Empfänger kann mittels eines Schalternetzwerks variabel in einen Nah- und Fernbereich aufgeteilt werden. Das wird genutzt, um das Empfangselement an der Grenze des Schaltabstands einmal dem Nah- und einmal dem Fernbereich zuzuschlagen und aus dem Quotienten der dabei jeweils gemessenen Empfangsspannung auf eine Subpixellage des Empfangslichtflecks zu schließen.

Die DE 10 2018 129 972 A1 befasst sich mit einem optoelektronischen Sensor, dessen Lichtempfangselement eine Vielzahl von Lawinenphotodiodenelementen im Geiger-Modus auf einem Substrat aufweist. Das Substrat ist auf einem gekrümmten Maßkörper angebracht beziehungsweise es ist eine Krümmeinrichtung vorgesehen, um die Krümmung des Substrats zu verändern.

In der DE 102 31 178 A1 werden jeweils die Signale mehrerer Lichtempfangselemente zusammengefasst. Die resultierende geringere Anzahl Verarbeitungskanäle erlaubt dann eine schnelle Abtastung beziehungsweise analoge und digitale Aufbereitung. Dies wird aber mit einem Verlust an Ortsauflösung erkauft. Die DE 102 31 178 A1 schlägt verschiedene Wege vor, die Lichtempfangselemente den Verarbeitungskanälen zuzuordnen. Die DE 199 62 701 A1 offenbart ein Verfahren zur Ermittlung der Position eines Lichtspots auf einer Fotodioden-Zeile. Dabei ist das Größenverhältnis zwischen Lichtspot und Fotodioden- Zellen derart gewählt, dass sich der Lichtspot zumindest über drei benachbarte Fotodioden-Zellen erstreckt. Dies ermöglicht eine Positionsbestimmung mit Subpixelauflösung.

In der EP 1 853 942 B1 wird ein Verfahren zum Betrieb eines optoelektronischen Sensors beschrieben, bei dem die Signale abgetastet und zur Störlichtunterdrückung gefiltert werden. Eine solche aufwändige Verarbeitung ist jedoch nicht für alle Lichtempfangselemente selbst einer nur mäßig hochauflösenden Empfängerzeile zu leisten.

Manche Objekte stellen den Sensor vor besondere Herausforderungen. Dazu zählen glänzende oder transparente Objekte. Die Erfassung kann zusätzlich erschwert werden, etwa durch einen wenig variierenden Hintergrund oder ein flaches Objekt mit kleinem Abstand zu einem auszublendenden Hintergrund. Es gibt sogenannte Glaslichtschranken, deren Schaltschwelle nahe dem Pegel eines freien Lichtwegs gesetzt ist, so dass auch die geringe Pegeländerung durch ein transparentes Objekt erkannt wird. Die Detektion ist nicht besonders robust. Außerdem können zusätzliche Glanz- oder Bündelungseffekte beispielsweise an einer gefüllten Flasche auftreten. Die DE 196 27 083 A1 setzt in einer Reflexionslichtschranke zu Erkennung von transparenten Objekten eine zusätzliche Schwelle, was aber das Robustheitsproblem nicht behebt. Die DE 10 2008 061 035 B3 bewertet die zweidimensionale Lichtverteilung des empfangenen Lichtflecks. Das erfordert einen höheren Aufwand und löst dennoch die Problematik nur zum Teil.

EP 2 503 360 B1 offenbart ein Verfahren zur optischen Erfassung zumindest teilweise transparenter Objekte mit einem ortsauflösenden Sensor, bei dem die Beleuchtungsstärke einzelner Pixel, deren örtliche Verteilung und ein aus der Verteilung bestimmter Abstand bewertet werden. Die Signale einzelner Pixel sind jedoch verrauscht, und dies überträgt sich in eine Ungenauigkeit sowohl der Beleuchtungsstärke als auch des Abstands. Es wurde bereits ausgeführt, dass eine aufwändige Verarbeitung zur Rauschunterdrückung auf Pixelebene nicht zu leisten ist. Ferner schlägt die EP 2 503 360 B1 vor, mit einer Kalibriermessung und einer Referenzierung auf das hellste Pixel konstante Störeinflüsse zu reduzieren. Damit wird jedoch keine Störunterdrückung von Wechsellicht, wie es beispielsweise von LED-Lichtquellen ausgesandt wird, oder von Störlicht erreicht, das auf den übrigen Pixeln unterschiedlich starke Störungen erzeugt. Maßnahmen zur Störunterdrückung über diese Referenzierung hinaus sind nicht offenbart. Auch mit dem Vorgehen der EP 2 503 360 B1 bleiben viele problematische Erfassungssituationen ungelöst.

Aus der EP 2 390 620 B1 ist ein optoelektronischer Sensor zur Detektion von Objektkanten bekannt. Dabei werden Lichtflecken von zwei Seiten erzeugt, auf einer jeweiligen Empfängerzeile detektiert und vergleichend bewertet.

Die EP 3 379 293 B1 offenbart einen optoelektronischen Sensor, der ein schaltendes und ein messendes Prinzip kombiniert. Dafür werden zusammenfassende Verarbeitungskanäle gebildet, und zur Erzeugung eines über die Empfängerzeile ortsaufgelösten Lichtverteilungssignals wird die Zuordnung eines Verarbeitungskanals in einer Art Scanvorgang mittels Multiplexing nach und nach über die Empfängerzeile variiert. Das ist nur als gelegentliche Zusatzinformation zu der schaltenden Primärfunktion gedacht und wäre für eine eigentliche Triangulationsmessung viel zu träge. Der Scanvorgang nimmt keinerlei Rücksicht auf die tatsächliche Lage des Empfangslichtflecks, die nur im Nachhinein in langsamen Zyklen festgestellt werden kann.

Die EP 2 520 952 A2 beschreibt ein Verfahren zur Objektfeststellung, bei dem statistische Momente aus einer Zeitreihe des Empfangssignals ermittelt werden. Dadurch können Schwellen nachgeführt werden, um Verschmutzung, Alterung und sonstige Driften auszugleichen. Das vermag eine anfängliche Leistungsfähigkeit zu erhalten, erreicht aber kein grundsätzlich verbessertes Schaltverhalten bei transparenten oder glänzenden Objekten.

Die noch unveröffentlichte europäische Patentanmeldung mit dem Aktenzeichen EP21216205.1 offenbart einen optoelektronischen Sensor nach dem Triangulationsprinzip, der Empfangssignale der Lichtempfangselemente in Verarbeitungskanälen zusammenfasst. Drei dieser Verarbeitungskanäle werden jeweils so gebildet, dass sie die linke Flanke, das Zentrum und die rechte Flanke des Empfangslichtflecks erfassen.

Es ist daher Aufgabe der Erfindung, die Messung mit einem gattungsgemäßen Sensor weiter zu verbessern.

Diese Aufgabe wird durch einen optoelektronischen Sensor und ein Verfahren zum Erfassen eines Objekts in einem Überwachungsbereich nach Anspruch 1 beziehungsweise 13 gelöst. Der Sensor ist beispielsweise ein Triangulationstaster, ein hintergrundausblendender Lichttaster oder eine Lichtschranke. Ein Lichtsender sendet Licht in den Überwachungsbereich, vorzugsweise einen durch eine Sendeoptik gebündelten oder kollimierten Lichtstrahl. Das nach Remission oder Reflexion von dem Objekt zurückkehrende Licht erzeugt einen Empfangslichtfleck auf einem Lichtempfänger, der eine Vielzahl von Lichtempfangselementen oder Pixeln aufweist. Dabei bilden Lichtsender und Lichtempfänger eine Triangulationsanordnung, sind also gemäß dem Triangulationsprinzip so zueinander angeordnet und ausgerichtet, dass der Empfangslichtfleck in Abhängigkeit des Abstands des angetasteten Objekts über die Lichtempfangselemente des Lichtempfängers wandert.

Aus den Empfangssignalen wird ein erstes Merkmal des Empfangslichtflecks bestimmt und das erste Merkmal bewertet. Dies kann als eine Betrachtung oder Bewertung in einer ersten Detektions- oder Merkmalsdimension bezeichnet werden. Damit wird bestimmt, ob ein Objekt anwesend oder abwesend ist. Das kann noch an eine Bedingung geknüpft werden, wie einen bestimmten Abstandsbereich. Beispielsweise ignoriert ein hintergrundausblendender Lichttaster ein anwesendes Objekt in einem Abstand, der dem Hintergrund entspricht, sieht es folglich als abwesend an. Vorzugsweise wird ein entsprechendes binäres Objektfeststellungssignal als Schaltsignal ausgegeben.

Die Erfindung geht von dem Grundgedanken aus, mindestens noch ein zweites Merkmal des Empfangslichtflecks zu bestimmen und zu bewerten. Es erfolgt somit eine Betrachtung oder Bewertung in mehreren Detektions- oder Merkmalsdimensionen. Beide oder alle Merkmalsdimensionen tragen zu der Entscheidung über die Anwesenheit oder Abwesenheit des Objekts bei, wobei je nach Ausführungsform einhellige, mehrheitliche, gewichtete und weitere Entscheidungen denkbar sind.

Die Erfindung hat den Vorteil, dass die Erkennung kritischer Objekte, insbesondere zumindest teilweise transparenter oder glänzender Objekte, deutlich verbessert wird. Die verschiedenen Merkmalsdimensionen können einander ergänzen und kompensieren, so dass insgesamt eine wesentlich verlässlichere und robustere Anwesenheitsentscheidung gefällt werden kann.

Die Steuer- und Auswertungseinheit ist dafür ausgebildet, für die Bewertung eines Merkmals mit Grenzwerten für die Abwesenheit und/oder Grenzwerten für die Anwesenheit zu vergleichen. Insbesondere wird durch zwei Grenzwerte ein Intervall abgesteckt. Liegt ein Merkmal in diesem Intervall oder erfüllt sonstige durch die Grenzwerte definierte Bedingungen, so zeigt damit dieses Merkmal die Abwesenheit eines Objekts an, indiziert somit einen Zustand "Erfassung von Hintergrund" beziehungsweise einen Schaltzustand "Aus". Ganz analog kann ein Merkmal mit Grenzwerten für die Anwesen"eit eines Objekts bewertet werden, das bei Erfüllung von durch die Grenzwerte definierten Bedingungen den Zustand "Objekt" beziehungsweise einen Schaltzustand "Ein" indiziert. Eine jeweilige Bewertung betrifft zunächst ein einzelnes Merkmal, eine Kombination der Bewertungen führt dann insgesamt zu einer Entscheidung. Der Vergleich eines Merkmals mit Grenzwerten kann eine Hysterese aufweisen. Es werden dann insbesondere zwei Grenzwerte gesetzt, und erst bei Überschreiten des jeweils ferneren Grenzwerts wird umgeschaltet.

Die Steuer- und Auswertungseinheit ist bevorzugt dafür ausgebildet, die Grenzwerte durch Erfassen von Empfangssignalen während einer Beobachtung eines Überwachungsbereichs ohne Objekt oder während einer Beobachtung eines Überwachungsbereichs mit verschiedenen Objekten und Bestimmung einer sich während der Beobachtung ergebenden Varianz festzulegen. Die Festlegung der Grenzwerte erfolgt vorzugsweise vorab beispielsweise in einem Einlernverfahren. Durch Beobachtung eines typischen Hintergrunds beziehungsweise typischer zu erfassender Objekte kann der Sensor auf die zu erwartende Bandbreite von Erfassungssituationen vorbereitet werden. Derart gesetzte Grenzwerte berücksichtigen die zu erwartende Varianz und sind entsprechend robust. Es ist denkbar, zu erwartende Änderungen der Betriebsbedingungen während der Beobachtung durch zu spielen, insbesondere die Beobachtung über verschiedene Außenhelligkeiten und Objekte zu erstrecken.

Die Steuer- und Auswertungseinheit ist bevorzugt dafür ausgebildet, die Abwesenheit des Objekts festzustellen, wenn dies die Bewertung für alle Merkmale ergibt, und sonst die Anwesenheit des Objekts festzustellen. Es gibt zahlreiche Möglichkeiten, die Bewertungen in den einzelnen Detektions- oder Merkmalsdimensionen zu einer gemeinsamen Entscheidung über die Anwesenheit oder Abwesenheit eines Objekts zusammenzufassen. In dieser bevorzugten Ausführungsform wird in einer Art inverser Objektdetektion speziell die Abwesenheit festgestellt, und es wird nach Art einer logischen UND-Verknüpfung gefordert, dass die Abwesenheit in allen Merkmalsdimensionen erkannt wird. Bei Objekten ist eine größere Varianz zu erwarten als beim Hintergrund, deshalb ist diese Art der gemeinsamen Entscheidung, die sich auf den stabileren Hintergrund bezieht, besonders robust. Statt einer einhelligen Bewertung in allen n Merkmalen ist alternativ eine Mehrheitsentscheidung in m aus n Merkmalen denkbar, einschließlich m=1 und damit einer entsprechenden, nicht-erfindungsgemäßen

Bewertung in lediglich mindestens einer Merkmalsdimension oder m=n-1, wo erfindungsgemäß höchstens eine Merkmalsdimension abweichen darf. Die Merkmalsdimensionen können zusätzlich oder alternativ unterschiedlich gewichtet werden. Die genannten Kombinationsmöglichkeiten der Merkmalsdimensionen sind für eine Erkennung der Anwesenheit statt der Abwesenheit ebenfalls möglich.

Die Steuer- und Auswertungseinheit weist bevorzugt mehrere Verarbeitungskanäle auf, in denen jeweils Empfangssignale von einer Gruppe von Lichtempfangselementen zusammengefasst werden. Es werden somit jeweils Gruppen von vorzugsweise zueinander benachbarten Lichtempfangselementen in einem Verarbeitungskanal zusammengefasst. Es kann dabei mindestens einen Verarbeitungskanal geben, der nur einem einzigen Lichtempfangselement zugeordnet ist. Das ist dann aber eine Ausnahme, bei der zumindest die weiteren Verarbeitungskanäle mehrere Lichtempfangselemente zusammenfassen. Es gibt in jedem Fall deutlich weniger Verarbeitungskanäle als Lichtempfangselemente, so dass ein Zusammenfassen, Binning oder Downsampling der Ortsauflösung stattfindet. Als stille Voraussetzung wird vorzugsweise noch angenommen, dass ein Lichtempfangselement höchstens einem Verarbeitungskanal zugeordnet sein darf. Umgekehrt ist aber erlaubt, dass ein Lichtempfangselement zumindest vorübergehend gar keinem Verarbeitungskanal zugeordnet ist. Wegen der Zusammenfassung in Verarbeitungskanälen können sich Lichtempfangselemente eine schnelle Abtastung sowie analoge und digitale Signalaufbereitung teilen, und für die geringe Anzahl Verarbeitungskanäle ist dies auch in vergleichsweise einfachen Sensoren aufwändig und hochwertig realisierbar. Dadurch können die Merkmale aus besonders hochwertigen Signalen gewonnen und die Merkmalsdimensionen entsprechend robust bewertet werden.

Die Verarbeitungskanäle sind bevorzugt für eine analoge und/oder digitale Signalaufbereitung der Empfangssignale ausgebildet, insbesondere mit einem Verstärker, einem Filter für Gleichlichtanteile, einem A/D-Wandler, einem Glättungsfilter und/oder einem Frequenzfilter. Dadurch wird eine erheblich robustere Erfassung ermöglicht. Da es nur vergleichsweise wenige Verarbeitungskanäle gibt, kann ohne allzu großen Aufwand auch mit komplexeren Bausteinen gearbeitet werden. Eine beispielhafte Signalverarbeitung sieht im Analogteil eine Verstärkung, ein Herausfiltern des Gleichlichtanteils (DC) und nach A/D-Wandlung weitere digitale Filter wie einen FIR-Filter vor.

Die Steuer- und Auswertungseinheit ist bevorzugt für eine Störfilterung in mindestens einem Verarbeitungskanal ausgebildet, wobei insbesondere anhand einer Beobachtung der Störumgebung ein geeigneter Zeitpunkt für eine Signalaufnahme bestimmt wird. Die Störfilterung kann Teil der im Vorabsatz erwähnten Signalaufbereitung sein. Die Verarbeitungskanäle ermöglichen in dieser Ausführungsform, dynamische Störungen zu identifizieren, die also nur zu bestimmten Zeiten vorhanden sind. Ein typisches Beispiel ist ein baugleicher Sensor mit seinen Lichtsignalen. Durch die Beobachtung der Störumgebung kann beispielsweise eine Störsynchronisation erfolgen, durch die der Sensor solchen temporären Störungen ausweicht, indem die Signalaufnahme immer in möglichst störungsfreien Zeitintervallen erfolgt.

Die Empfangssignale der Verarbeitungskanäle sind bevorzugt analog zusammengeführt. Das entsprechende gemeinsame Empfangssignal des Verarbeitungskanals, beispielsweise ein Summensignal, kann dann durch Bauteile verarbeitet werden, die nur einmal pro Verarbeitungskanal benötigt werden, beispielsweise Verstärker, analoge Filter oder ADCs. Dadurch können hochwertige Bauteile verwendet werden, ohne dabei die Herstellkosten, den Bauraum- oder Flächenbedarf oder die Leistungsaufnahme über Gebühr zu verschlechtern.

Vorzugsweise sind mindestens drei Verarbeitungskanäle vorgesehen, nämlich ein Zentralkanal, auf dessen zugeordnete Gruppe von Lichtempfangselementen das Zentrum des Empfangslichtflecks fällt, ein rechter Flankenkanal, auf dessen zugeordnete Gruppe von Lichtempfangselementen ein rechter Teil des Empfangslichtflecks fällt, sowie ein linker Flankenkanal, auf dessen zugeordnete Gruppe von Lichtempfangselementen ein linker Teil des Empfangslichtflecks fällt. Mit den drei Verarbeitungskanälen ist eine genaue Positionsbestimmung des Empfangslichtflecks ermöglicht. Einem dieser Verarbeitungskanäle, der als Zentralkanal bezeichnet wird, ist dasjenige mindestens eine Lichtempfangselement zugeordnet, auf das das Zentrum des Empfangslichtflecks fällt. Das Zentrum kann beispielsweise durch ein statistisches Maß festgelegt sein, wie dem Schwerpunkt, dem Maximum oder dem Median der Lichtverteilung über den Empfangslichtfleck in der Zeilenrichtung des Lichtempfängers. Die Lichtempfangselemente zu beiden Zeiten des Zentrums sind einem rechten beziehungsweise linken Flankenkanal zugeordnet und detektieren somit einen rechten beziehungsweise linken Teil des Empfangslichtflecks. Diese Zuordnung der drei Verarbeitungskanäle zu den Lichtempfangselementen, auf die der Empfangslichtfleck fällt, kann ein beispielsweise kalibrierter oder voreingestellter fixer Zustand des Sensors sein. Vorzugsweise handelt es sich um einen Zielzustand, der dynamisch immer wieder eingestellt oder eingeregelt wird. Die Zuordnung ist damit flexibel und anpassbar.

Der Zentralkanal weist bevorzugt die höchste Auflösung auf. Die Auflösung korrespondiert mit der Gruppengröße. Je weniger Lichtempfangselemente einem Verarbeitungskanal zugeordnet sind, desto weniger Ortsauflösung geht durch die Zusammenfassung in diesem Verarbeitungskanal verloren. Die höchste Auflösung des Zentralkanals kann relativ verstanden werden, es gibt dann keinen anderen Verarbeitungskanal mit geringerer Gruppengröße. Sie kann aber auch absolut verstanden werden, indem die dem Zentralkanal zugeordnete Gruppe von Lichtempfangselementen nur ein einziges Lichtempfangselement aufweist. Das ist die höchstmögliche Auflösung, die der Lichtempfänger leisten kann, wobei eine algorithmische Auflösungserhöhung noch denkbar bleibt. Damit findet in dem Zentralkanal ausnahmsweise keine echte Zusammenfassung statt. Der Zentralkanal ermöglicht in jedem Fall, seine Verarbeitungskapazität, beispielsweise hohe Abtastrate oder Signalaufbereitung, flexibel einem beliebigen Lichtempfangselement zuzuordnen. Vorzugsweise ist das dasjenige für eine Triangulation besonders wichtige Lichtempfangselement, auf das das Zentrum des Empfangslichtflecks fällt.

Die dem Zentralkanal und den Flankenkanälen zugeordneten Lichtempfangselemente decken den Empfangslichtfleck vorzugsweise vollständig ab, insbesondere genau den Empfangslichtfleck. Zentralkanal und Flankenkanäle gemeinsam sind damit sämtliche Lichtempfangselemente zugeordnet, die einen Teil des Empfangslichtflecks detektieren. Der Empfangslichtfleck wird in diesen drei Kanälen vollständig erfasst. Die vollständige Abdeckung ist zunächst im Sinne einer hinreichenden Bedingung gemeint, jedes Lichtempfangselement, das einen Teil des Empfangslichtflecks registriert, ist einem dieser drei Kanäle zugeordnet. Vorzugsweise ist die Abdeckung auch im Sinne einer notwendigen Bedingung gemeint. Der Empfangslichtfleck wird dann durch die den drei Kanälen zugeordneten Lichtempfangselemente genau abgedeckt, kein Lichtempfangselement, das den drei Kanälen zugeordnet ist, empfängt lediglich Hintergrundlicht. Die dafür notwendige Anzahl abzudeckender Lichtempfangselemente kann vorab festgelegt oder dynamisch bestimmt sein. Der Empfangslichtfleck ist im Nahbereich eines angetasteten Objekts breiter als im Fernbereich. Eine Abdeckung des Empfangslichtflecks im Sinne einer hinreichenden Bedingung ist also durch eine konstante Festlegung auf den Nahbereich möglich. Außerdem ist die Beziehung der Empfangslichtfleck Breite in Abhängigkeit vom Abstand durch den Sensor, dessen Aufbau und Optiken bestimmt und somit vorab bekannt oder kalibrierbar, so dass auch eine genaue Abdeckung durch eine fixe, nun abstandsabhängige Festlegung der Zuordnung möglich ist. Alternativ können in einer dynamischen Zuordnung testweise Lichtempfangselemente zu einem Flankenkanal hinzugefügt oder dort weggenommen werden. Ob dabei ein Lichtempfangselement beteiligt ist, auf das der Empfangslichtfleck fällt, lässt sich durch Vergleich mit dem Hintergrundpegel feststellen.

Die Steuer- und Auswertungseinheit ist bevorzugt dafür ausgebildet, den Zentralkanal und die Flankenkanäle zum Empfangslichtfleck auszurichten, indem ein Pegel des linken Flankenkanals und des rechten Flankenkanals verglichen wird und im Falle eines über eine Toleranzschwelle hinausgehenden Unterschieds der Zentralkanal und die Flankenkanäle in Richtung des kleineren Pegels verschoben werden. Bildlich gesprochen werden die Flankenkanäle durch Verschieben der drei Verarbeitungskanäle relativ zu dem Lichtempfänger ausbalanciert, um den Zentralkanal im Zentrum des Empfangslichtflecks zu halten. Sofern die beiden Flankenkanäle nicht gleich breit sind, ihnen also eine unterschiedliche Anzahl Lichtempfangselemente zugeordnet ist, kann dies vorzugsweise aus den Pegeln herausgerechnet werden. Bei einer ausgleichenden Verschiebung wird den Verarbeitungskanälen in Verschiebungsrichtung mindestens ein Lichtempfangselement hinzugefügt und gegen die Verschiebungsrichtung mindestens ein Lichtempfangselement weggenommen.

Die Steuer- und Auswertungseinheit ist bevorzugt dafür ausgebildet, um eine konstante Anzahl von Lichtempfangselementen zu verschieben. Die konstante Anzahl beträgt mindestens eins und ist vorzugsweise höchstens so groß wie die Gruppengröße der drei Verarbeitungskanäle, weil sonst der Empfangslichtfleck oder jedenfalls dessen Zentrierung womöglich verloren wird. Das ist eine sehr einfache Vorschrift, die aber in der Praxis oft schon ausreicht, um die Verarbeitungskanäle zum Empfangslichtfleck auszurichten.

Die Steuer- und Auswertungseinheit ist bevorzugt dafür ausgebildet, um eine Anzahl von Lichtempfangselementen zu verschieben, die vom Verhältnis oder Unterschied des Pegels des linken Flankenkanals zu dem Pegel des rechten Flankenkanals abhängt. Das Verhältnis der Pegel zueinander oder deren Unterschied sind ein Maß dafür, wie stark der Empfangslichtfleck gegenüber der gewünschten Ausrichtung Verarbeitungskanälen noch dezentriert ist. Daher kann es sinnvoll sein, die Verschiebung von diesem Maß abhängig zu machen, um die gewünschte Ausrichtung in weniger Schritten zu erreichen.

Die Steuer- und Auswertungseinheit ist bevorzugt dafür ausgebildet, das Ausrichten zu iterieren. Nach einem einzelnen Verschiebungsschritt gibt es möglicherweise immer noch einen Pegelunterschied zwischen dem linken und rechten Flankenkanal. Durch Iteration lässt sich dann das Ausrichten vollenden. Mit Iteration sind hier vorzugsweise komplexere Algorithmen umfasst, die beispielsweise die Schrittweite kleiner werden lassen oder mit sonstigen an sich aus der Regelungstechnik bekannten Verfahren dafür sorgen, dass die drei Verarbeitungskanäle zu einem auch wandernden oder springenden Empfangslichtfleck ausgerichtet werden beziehungsweise bleiben.

Vorzugsweise ist mindestens ein weiterer Verarbeitungskanal vorgesehen, nämlich ein Hintergrundkanal, auf dessen zugeordnete Gruppe von Lichtempfangselementen der Empfangslichtfleck nicht fällt. Zwar ist die Informationen über den Empfangslichtfleck für eine Triangulation besonders wichtig, dennoch kann es vorteilhaft sein, den Hintergrund zu vermessen. Daraus können Korrekturen abgeleitet werden, und es kann besonders vorteilhaft festgestellt werden, wenn es mehrere Empfangslichtflecken gibt oder der Empfangslichtfleck aus den Lichtempfangselementen herausgelaufen ist, die den Zentralkanal und den Flankenkanälen zugeordnet sind.

Vorteilhafterweise ist mindestens je ein Hintergrundkanal für einen Nahbereich und einen Fernbereich des Lichtempfängers vorgesehen. Der Hintergrund wird somit an mehreren Stellen vermessen, wobei im Nahbereich und Fernbereich durchaus relevante Unterschiede vorhanden sein können.

Die Steuer- und Auswertungseinheit ist bevorzugt für eine Neuaufteilung der Verarbeitungskanäle ausgebildet, in der zunächst unabhängig von einer Kenntnis der Lage des Empfangslichtflecks auf dem Lichtempfänger Gruppen von Lichtempfangselementen über einen Bereich des Lichtempfängers einem jeweiligen Verarbeitungskanal zugeordnet werden. Beispielsweise beim Einschalten des Sensors oder wenn ein neues Objekt in den Überwachungsbereich tritt, fehlt eine Information, wo sich der Empfangslichtfleck befindet. Damit können Zentralkanal und Flankenkanäle noch nicht zugeordnet werden. Für eine initiale Suche nach dem Empfangslichtfleck werden die Lichtempfangselemente auf die verfügbaren Verarbeitungskanäle verteilt, beispielsweise der Lichtempfänger in gleich breite Abschnitte unterteilt. Es ist denkbar, dass es eine Vorinformation über eine vermutete odertatsächliche Position des Empfangslichtflecks gibt. Dann können die Verarbeitungskanäle nur über einen entsprechenden Bereich des Lichtempfängers verteilt werden. Diese Vorinformation kann beispielsweise eine frühere Messung oder ein bestimmter Arbeitsbereich sein. Ein unten noch genauer betrachteter Sonderfall ist, dass der Empfangslichtfleck in Lichtempfangselemente gewandert ist, die einem Hintergrundkanal zugeordnet sind. In diesem Fall können die Lichtempfangselemente des Hintergrundkanals und nicht sämtliche Lichtempfangselemente auf die verfügbaren Verarbeitungskanäle aufgeteilt werden, um den Empfangslichtfleck genauer zu lokalisieren.

Die Steuer- und Auswertungseinheit ist bevorzugt dafür ausgebildet, mittels der neu aufgeteilten Verarbeitungskanäle eine Positionsbestimmung des Empfangslichtflecks vorzunehmen und damit zumindest den Zentralkanal und die Flankenkanäle zu initialisieren. Mit den Verarbeitungskanälen gemäß der Neuaufteilung kann die Position des Empfangslichtflecks zumindest grob geschätzt werden. Dazu wird beispielsweise ein Median, ein Maximum, ein Schwerpunkt oder ein sonstiges statistisches Maß über die Pegel in den Verarbeitungskanälen bestimmt. Beispielsweise wird dann das auf diese Weise gefundene mindestens eine Lichtempfangselement vorläufig dem Zentralkanal zugeordnet, die Nachbarn zu beiden Seiten den Flankenkanälen und übrige Lichtempfangselemente dem mindestens einen Hintergrundkanal, sofern vorhanden. Damit ist eine verbesserte Anfangskonfiguration gefunden, aus der durch das oben beschriebene Ausbalancieren anhand der Pegel in den Flankenkanälen, gegebenenfalls nach Iteration, eine Ausrichtung der Verarbeitungskanäle bezüglich des Empfangslichtflecks vorgenommen werden kann.

Die Steuer- und Auswertungseinheit ist bevorzugt dafür ausgebildet, die Pegel in dem Zentralkanal und den Flankenkanälen einerseits und die Pegel in dem mindestens einen Hintergrundkanal andererseits zu vergleichen, um festzustellen, ob der Empfangslichtfleck in den Hintergrundkanal gewandert ist, und gegebenenfalls eine Neuaufteilung der Verarbeitungskanäle vorzunehmen. Solange Zentralkanal und Flankenkanäle zum Empfangslichtfleck richtig ausgerichtet sind, bleibt der Pegel in dem mindestens einen Hintergrundkanal auf einem Rauschniveau entsprechend dem Umgebungs- oder Hintergrundlicht. Sobald in dem Hintergrundkanal deutlich mehr Licht registriert wird, und dies womöglich bei gleichzeitigem Pegelverlust in Zentralkanal und/oder Flankenkanälen, wird angenommen, dass der Empfangslichtfleck aus dem Regelungsbereich herausgelaufen ist, in dem die Ausrichtung durch Balancieren gehalten werden kann. Beispielsweise ist dann ein neues Objekt in einem anderen Abstand in den Überwachungsbereich eingetreten. Um den Empfangslichtfleck wiederzufinden, kann nun der Hintergrundkanal aufgeteilt werden, wie dies im Vorabsatz beschrieben wurde.

In einigen Ausführungsformen, insbesondere in den letzten beiden Absätzen, werden vorläufige Merkmale oder Messwerte erzeugt, bei denen Zentralkanal und Flankenkanäle noch nicht optimal zum Empfangslichtfleck ausgerichtet sind. Solche Messwerte oder daraus resultierende Schaltzustände können bereits ausgegeben werden, um für eine besonders kurze Ansprechzeit beispielsweise bei Einsatz des Sensors in einem schnellen Regelkreis zu sorgen. Diese Messwerte oder Schaltzustände sind möglicherweise noch unpräzise, stehen dafür aber sehr schnell zur Verfügung. Alternativ kann die Messwertausgabe vorübergehend ausgesetzt oder ein Schaltausgang auf einen Vorbereitungs- oder Ungültigkeitszustand gesetzt werden, damit nur genaue Messwerte und Schaltzustände nach Ausrichtung von Zentralkanal und Flankenkanälen ausgegeben werden.

Die Steuer- und Auswertungseinheit ist dafür ausgebildet, als Merkmal des Empfangslichtflecks eine Position, eine Energie, eine Breite und/oder eine Mehrfachaufspaltung zu bestimmen und zu bewerten. Damit sind bis zu vier mögliche Merkmalsdimensionen konkret benannt, die sich in besonderer Weise für die Erfassung kritischer Objekte eignen, beispielsweise transparente oder glänzende Objekte. Es werden drei der Merkmale oder sogar alle vier Merkmale verwendet. Die Aufzählung ist nicht notwendig abgeschlossen, es können weitere Merkmale hinzukommen. Erstes Merkmal, zweites Merkmal und weitere Merkmale sind hier nur Namen, die beliebig zugeordnet werden können. Die Position des Empfangslichtflecks entspricht nach dem Triangulationsprinzip dem Abstand des Objekts, wobei nach dem Prinzip des hintergrundausblendenden Lichttasters der Abstand womöglich lediglich in Vordergrund und Hintergrund differenziert wird. Eine Bewertung der Energie ähnlich dem Prinzip einer Lichtschranke kann der gezielten Erfassung transparenter Objekte dienen. Die Breite des Lichtflecks kann zusätzlichen Aufschluss über Objekteigenschaften und Objektabstand geben. Eine Mehrfachaufspaltung des Lichtflecks oder ein Multireflex entsteht insbesondere an glänzenden Oberflächen. Eine kombinierte Bewertung von Abstand und Energie wird durch Hinzuziehen der Breite des Lichtflecks und/oder einer Mehrfachaufspaltung noch robuster.

Die Steuer- und Auswertungseinheit ist bevorzugt dafür ausgebildet, die Position aus der zugeordneten Gruppe des Zentralkanals zu bestimmen. Der Zentralkanal definiert sich gerade über den Median oder eine sonstige charakteristische Größe der Position des Lichtflecks. Vorzugsweise ist dem Zentralkanal genau ein Lichtempfangselement zugeordnet und damit die Position des Empfangslichtflecks mit dem Zentralkanal unmittelbar bekannt. Die Flankenkanäle können aber hinzugezogen werden, insbesondere um eine Subpixelauflösung zu erreichen. Bei einer Bewertung dieser Merkmalsdimension Position ohne Verarbeitungskanäle kann die Position des Empfangslichtflecks aus der Verteilung des Pegels der Empfangssignale über die einzelnen Lichtempfangselemente bestimmt werden, wiederum insbesondere aus einem statistischen Maß wie dem Median.

Die Steuer- und Auswertungseinheit ist bevorzugt dafür ausgebildet, die Energie durch Aufsummieren über die Verarbeitungskanäle zu bestimmen, insbesondere Aufsummieren über Zentralkanal und Flankenkanäle. Zentralkanal und Flankenkanäle decken den Empfangslichtfleck mindestens im Wesentlichen und vorzugsweise vollständig ab, so dass die empfangene Energie durch Summieren über diese drei Verarbeitungskanäle sehr schnell und präzise bestimmbar ist. Es ist auch denkbar, über alle Verarbeitungskanäle zu summieren, da weitere Verarbeitungskanäle über Zentralkanal und Flankenkanäle hinaus lediglich Hintergrund beitragen, der vernachlässigbar oder wenigstens im Mittel konstant ist. Bei einer Bewertung dieser Merkmalsdimension Energie ohne Verarbeitungskanäle kann der Pegel der Empfangssignale derjenigen Lichtempfangselemente aufsummiert werden, auf die der Empfangslichtfleck trifft. Das lässt sich durch eine Hintergrundschwelle entscheiden. Alternativ wird über sämtliche Lichtempfangselemente summiert und der Beitrag des Hintergrunds vernachlässigt oder als Konstante berücksichtigt.

Die Steuer- und Auswertungseinheit ist bevorzugt dafür ausgebildet, die Breite aus der Summe über Zentralkanal und Flankenkanäle zu bestimmen, insbesondere durch Bildung des Quotienten Summe durch Zentralkanal. Bei einer gleichen Anzahl Lichtempfangselemente, die dem Zentralkanal und den Flankenkanälen zugeordnet sind, würde man auf den ersten Blick erwarten, dass die Breite des Lichtflecks nicht genauer bestimmbar ist als über diese Anzahl. Tatsächlich lässt sich das aber genauer berechnen, da die Pegel in den drei Verarbeitungskanälen auch eine Information über die Breite enthalten. Dazu wird die Summe über Zentralkanal und Flankenkanäle bestimmt und dies beispielsweise durch Quotientenbildung mit dem Zentralkanal verglichen, um eine genauere Information über die Breite abzuleiten. Bei einer Bewertung dieser Merkmalsdimension Breite ohne Verarbeitungskanäle kann die Anzahl Lichtempfangselemente gezählt werden, auf die der Empfangslichtfleck fällt. Diese Lichtempfangselemente lassen sich wiederum über eine Hintergrundschwelle auffinden.

Die Steuer- und Auswertungseinheit ist bevorzugt dafür ausgebildet, eine Mehrfachaufspaltung durch Bewertung eines Hintergrundkanals zu bestimmen. Eine Mehrfachaufspaltung oder ein Multireflex äußert sich durch einen erhöhten Pegel in einem Hintergrundkanal, der dann nämlich einen sekundären Empfangslichtfleck registriert. Dies kann durch eine Veränderung des Pegels in dem Hintergrundkanal oder den Vergleich mit einer Hintergrundschwelle erkannt werden. Bei einer Bewertung dieser Merkmalsdimension Mehrfachaufspaltung ohne Verarbeitungskanäle kann die Pegelverteilung über die Lichtempfangselemente betrachtet werden, die im Falle einer Mehrfachaufspaltung bimodal oder multimodalwird.

Der Sensor weist bevorzugt mindestens einen zusätzlichen Lichtsender auf, wobei die Steuer- und Auswertungseinheit dafür ausgebildet ist, die Lichtsender alternativ zu aktivieren, um zusätzliche Merkmale zu erzeugen. Je nach aktiviertem Lichtsender entsteht ein Empfangslichtfleck mit anderen Eigenschaften, insbesondere anderer Position, Energie, Breite oder Mehrfachaufspaltung. Mit einem alternierend betriebenen Doppellichtsender können so die Merkmalsdimensionen verdoppelt, bei mehr als einem zusätzlichen Lichtsender auch vervielfacht werden. Es ist aber keineswegs zwingend erforderlich, sämtliche Merkmalsdimensionen auszunutzen, vielmehr kann eine Auswahl getroffen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines optoelektronischen Sensors;
- Fig. 2: eine schematische Draufsicht auf einen Lichtempfänger mit zeilenförmig angeordneten Lichtempfangselementen und einen davon detektierten Empfangslichtfleck;
- Fig. 3: eine schematische dreidimensionale Darstellung einer Bewertung in mehreren Merkmalsdimensionen;
- Fig. 4a-b: eine in zwei Teilansichten getrennte schematische Darstellung einer Bewertung in mehreren Merkmalsdimensionen mit Hysterese;
- Fig. 5: eine schematische Darstellung eines beispielhaften zeitlichen Signalverlaufs mit Bewertung in mehreren Merkmalsdimensionen;
- Fig. 6: eine schematische Darstellung eines optoelektronischen Sensors mit Doppellichtsender zur Erzeugung zusätzlicher Merkmalsdimensionen;
- Fig. 7: eine Darstellung der Pegel in mehreren, hier sechs Verarbeitungskanälen, auf die die Lichtempfangselemente eines Lichtempfängers aufgeteilt sind, wobei in diesem Beispiel der Empfangslichtfleck mittig von einem sehr schmalen Zentralkanal und zwei Flankenkanälen untereinander ausbalancierten Pegels erfasst wird;
- Fig. 8: eine Darstellung ähnlich Figur 7, wobei sich nun die Ausrichtung nach rechts verschoben hat;
- Fig. 9: eine Darstellung ähnlich Figur 8 nach einem Korrekturschritt, der den Zentralkanal und die Flankenkanäle wieder zum Empfangslichtfleck ausrichtet;
- Fig. 10: eine Darstellung des Pegels in einem Hintergrundkanal, nachdem der Empfangslichtfleck aus dem Zentralkanal und den Flankenkanälen gemäß den Figuren 7-9 herausgelaufen ist;
- Fig. 11: eine Darstellung ausgehend von Figur 10, in der mehrere, hier sechs Verarbeitungskanäle sich den vormaligen Hintergrundkanal neu aufteilen;
- Fig. 12: eine Darstellung ähnlich Figur 7, in der Zentralkanal und Flankenkanäle durch Auswertung der Verarbeitungskanäle gemäß Figur 11 neu festgelegt und grob zum Empfangslichtfleck ausgerichtet sind;
- Fig. 13: eine Darstellung ähnlich Figur 12 nach einem Korrekturschritt in Analogie zu Figur 9, der den Zentralkanal und die Flankenkanäle nun mittig zum Empfangslichtfleck ausrichtet;
- Fig. 14: eine schematische Darstellung der Verarbeitungskanäle im Falle eines schmalen Empfangslichtflecks;
- Fig. 15: eine schematische Darstellung ähnlich Figur 14 im Falle eines breiteren Empfangslichtflecks;
- Fig. 16: eine schematische Darstellung der Verarbeitungskanäle und der Lichtverteilung im Falle einer Einfachreflexion;
- Fig. 17: eine schematische Darstellung ähnlich Figur 16 im Falle einer zusätzlichen Reflexion; und
- Fig. 18: eine schematische Darstellung ähnlich Figur 17 nun bei einer schwächeren zusätzlichen Reflexion.

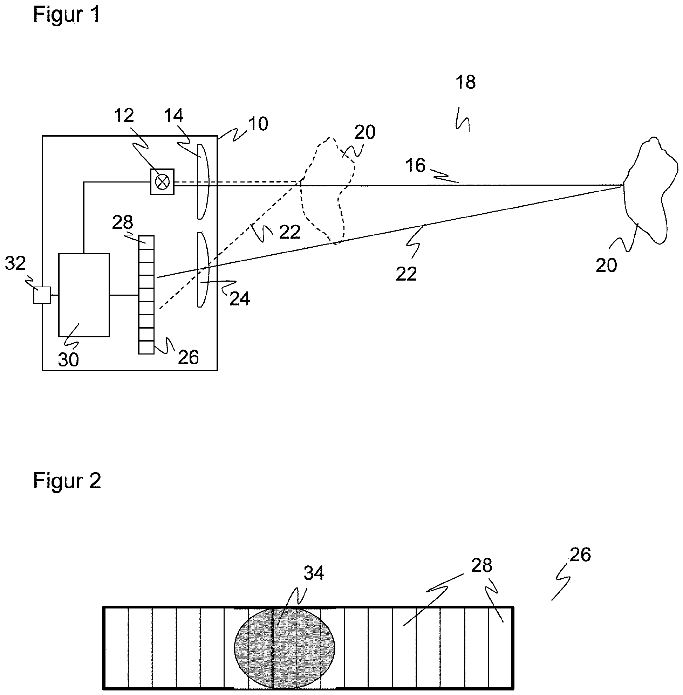

Figur 1 zeigt eine schematische Schnittdarstellung eines Sensors 10 in Triangulationsanordnung. Ein typisches, aber nicht einschränkendes Anwendungsbeispiel ist die schnelle Objekt- und Kantendetektion bei seitlich einfahrenden Objekten beispielsweise an einem Förderband.

Ein Lichtsender 12 sendet über eine strahlformende Sendeoptik 14 einen Lichtstrahl 16 in einen Überwachungsbereich 18 aus. Fällt der Lichtstrahl 16 auf ein Objekt 20, so gelangt ein Teil des Sendelichts als remittierter oder reflektierter Lichtstrahl 22 zurück zu dem Sensor 10. Eine Empfangsoptik 24 fängt diesen remittierten Lichtstrahl 22 auf und leitet ihn auf einen Lichtempfänger 26, wo das einfallende Licht in ein elektrisches Empfangssignal umgewandelt wird. Der Lichtempfänger 26 weist eine Vielzahl von Pixeln oder Lichtempfangselementen 28 auf, insbesondere Photodioden, beispielsweise eine Anzahl von 64 bis 512 Pixel. Die Lichtempfangselemente 28 bilden eine Zeilenanordnung. Es können mehrere Zeilen vorgesehen oder Zeilen aus einer Matrixanordnung verwendet werden.

Aufgrund der Triangulationsanordnung, in der Ausführungsform nach Figur 1 des Versatzes zwischen Lichtsender 12 mit Sendeoptik 14 gegenüber dem Lichtempfänger 26 mit Empfangsoptik 24, und wegen der Anordnung der Lichtempfangselemente 28 längs der Querverbindung zwischen Lichtsender 12 und Lichtempfänger 26 fällt der remittierte Lichtstrahl 22 eines mit gestrichelten Linien dargestellten nahen Objekts 20 auf andere Lichtempfangselemente 28, in Figur 1 weiter unten, als der remittierte Lichtstrahl 22 eines mit durchgezogenen Linien dargestellten fernen Objekts 20. Die Position des Empfangslichtflecks, auch dessen Ablage, Offset oder Displacement genannt, die sich darin niederschlägt, welches oder welche der Lichtempfangselemente 28 den Empfangslichtfleck erfasst, ist daher ein Maß für den Abstand des Objekts 20.

Eine Steuer- und Auswertungseinheit 30 ist mit dem Lichtsender 12 zu dessen Ansteuerung und mit dem Lichtempfänger 26 verbunden, um die elektrischen Empfangssignale der Lichtempfangselemente 28 weiter auszuwerten. Dabei wird insbesondere binär die Anwesenheit oder Abwesenheit eines jeweiligen Objekts 20 erkannt und ein entsprechendes Schaltsignal an einem Schaltausgang 32 erzeugt. Vorzugsweise ist der Sensor 10 als hintergrundausblendender Lichttaster ausgebildet wie einleitend kurz erläutert, der die Anwesenheit eines Objekts 20 nur in einem bestimmten Abstandsbereich erkennt und Objekte außerhalb dieses Abstandsbereichs als Hintergrundsignal ausblendet.

Für die Auswertung der Empfangssignale können Lichtempfangselemente 28 in vorteilhaften Ausführungsformen gruppenweise in Verarbeitungskanälen zusammengefasst oder zusammengeschaltet werden. In den Verarbeitungskanälen findet insbesondere eine Abtastung oder AD-Wandlung statt, zudem sind analoge und/oder digitale Vorverarbeitungen möglich, wie Verstärkung, Filterung, Rausch- und Hintergrundunterdrückung und dergleichen. Es gibt nur wenige Verarbeitungskanäle, in einer Ausführungsform sind es nur drei Verarbeitungskanäle, in anderen Ausführungsformen kommen ein Hintergrundkanal oder einige Hintergrundkanäle hinzu. Die Zahl der Verarbeitungskanäle bleibt damit vorzugsweise bei vier bis sechs oder acht, höchstens zehn und nochmals bevorzugt um einen Faktor von zehn oder mehr unterhalb der Anzahl der Lichtempfangselemente 28.

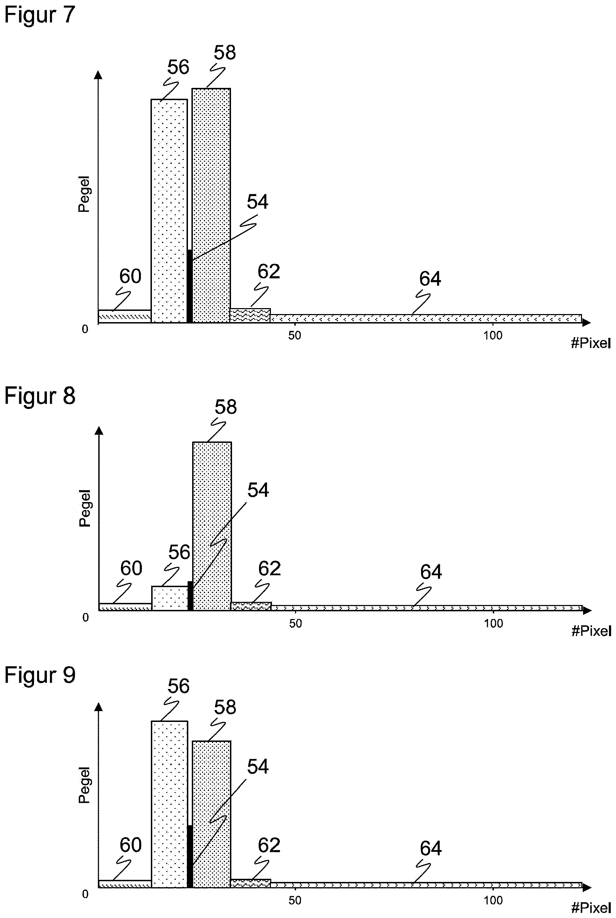

Figur 2 zeigt eine schematische Draufsicht des Lichtempfängers 26. Gegenüber der Figur 1 ist der Lichtempfänger 26 aus der Papierebene heraus und zudem innerhalb der Papierebene um 90° mit dem Uhrzeigersinn gedreht. Der remittierte Lichtstrahl 22 erzeugt einen Empfangslichtfleck 34, der auf einige der Lichtempfangselemente 28 fällt. Der Empfangslichtfleck 34 weist verschiedene Charakteristika oder Merkmale auf, wie dessen Position, Energie oder Breite, die zur Erkennung von Anwesenheit oder Abwesenheit des Objekts 20 herangezogen werden können. In Ausführungsformen mit Verarbeitungskanälen wird die Zuordnung der Lichtempfangselemente 28 zu Verarbeitungskanälen so gewählt und angepasst, dass die Position des Empfangslichtflecks 34 mit wenigen Verarbeitungskanälen genau erfasst werden kann. Eine Kanalaufteilung wird später unter Bezugnahme auf die Figuren 7 bis 13 näher erläutert.

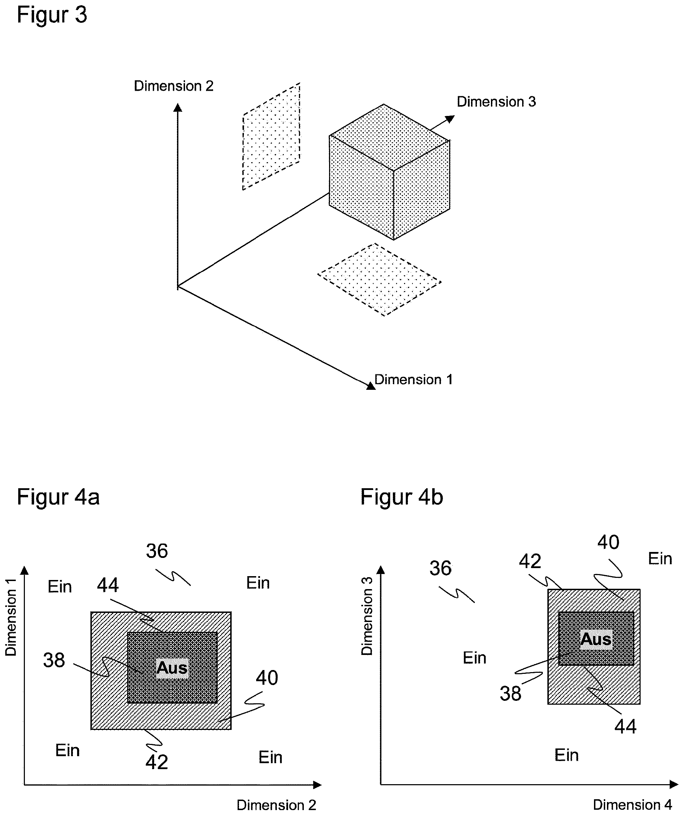

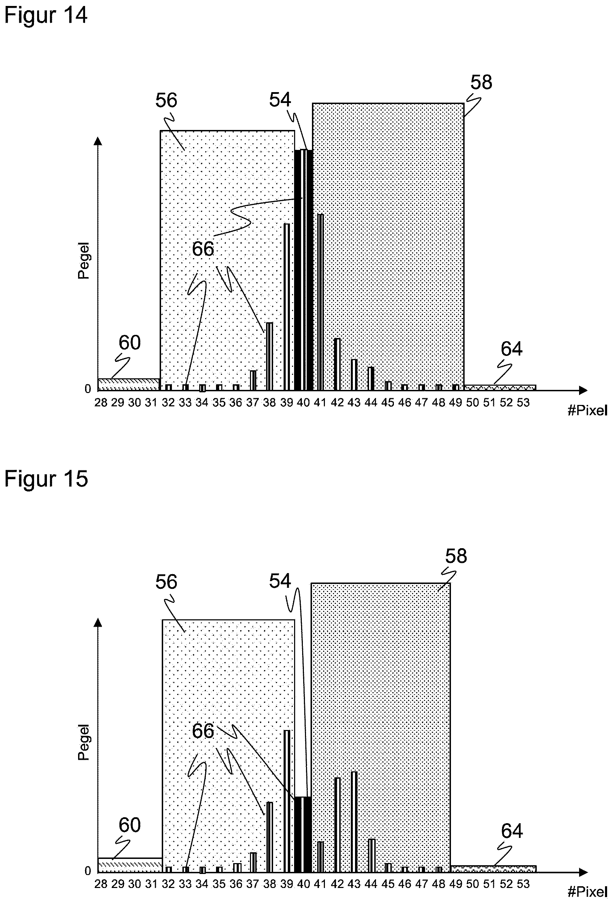

Figur 3 zeigt eine schematische dreidimensionale Darstellung einer Bewertung der Merkmale des Empfangslichtflecks 34 in mehreren Detektions- oder Merkmalsdimensionen. Die Merkmale werden zunächst ganz abstrakt nummeriert, konkrete mögliche Merkmale wie Position, Energie oder Breite werden später unter Bezugnahme auf die Figuren 14 bis 18 näher betrachtet. Die Darstellung von drei Merkmalsdimensionen ist rein beispielhaft zu verstehen.

Bei einem kritischen Objekt 20, beispielsweise einem zumindest teilweise transparenten oder glänzenden Objekt 20, dessen Anwesenheit oder Abwesenheit nur schwer festzustellen ist, führt eine einfache Erfassung beispielsweise lediglich in Abstand oder Energie zu Detektionsfehlern. Deshalb erfolgt eine kombinierte Bewertung in mehreren Merkmalsdimensionen, die sich vorzugsweise gerade dann gegenseitig unterstützen, wenn eine der Merkmalsdimensionen zu Fehlern neigt. Die Anwesenheit oder Abwesenheit des Objekts 20 lässt sich wahlweise auch als eine Unterscheidung von Objekt und Hintergrund oder ein Schaltzustand An oder Aus auffassen.

Es ergibt sich somit eine Betrachtung in einem n-dimensionalen Eigenschaftsraum, wobei n die Anzahl der bewerteten Merkmale oder Merkmalsdimensionen bezeichnet und in Figur 3 n=3 gilt. Es können Grenzwerte festgelegt werden, die Intervalle je Merkmalsdimension der Anwesenheit oder Abwesenheit des Objekts 20 definieren. In den drei Merkmalsdimensionen der Figur 3 ergibt sich dann aus der Überlagerung der Intervalle ein Quader, in der durch gestrichelte Linien angedeuteten Projektion auf jeweils zwei Merkmalsdimensionen ein Rechteck. Die Forderung, dass die aus dem Empfangslichtfleck 34 bestimmten Merkmale in allen Merkmalsdimensionen eine Bedingung erfüllen, entspricht einer Lage des entsprechenden Merkmalsvektors innerhalb des Quaders. Es ist denkbar, die Forderung einer Lage innerhalb des Quaders zu lockern und lediglich für m<n Merkmalsdimensionen ein Merkmal innerhalb eines durch Grenzwerte bestimmten Intervalls zu verlangen.

Vorzugsweise steht der Quader in Figur 3 für Abwesenheit des Objekts 20 beziehungsweise Hintergrund. Gewöhnlich dürften nämlich die Empfangssignale während der Erfassung des Hintergrundes eine deutlich geringere Varianz aufweisen als während der Erfassung unterschiedlicher Objekte. Daher ist bezüglich der Abwesenheit eine robustere Entscheidung zu erwarten als bezüglich der Anwesenheit, die vorzugsweise indirekt als Negation der Abwesenheit festgestellt wird. Bei diesem indirekten Vorgehen zur Feststellung der Anwesenheit kann in einem vorgelagerten Schritt der Hintergrund und dessen Varianz bestimmt werden, aus dem dann die Grenzwerte und somit anschaulich die Form, Größe und Lage des Quaders in Figur 3 abgeleitet werden. Solange die aus dem Empfangslichtfleck 34 bestimmten Merkmale sich innerhalb des Quaders befinden, wird der Schaltzustand "Aus" festgestellt. Wird der Quader in mindestens einer Merkmalsdimension verlassen, so wird nicht mehr nur Hintergrund erfasst, somit ein Objekt 20 erkannt und auf den Schaltzustand "Ein" gewechselt.

Wie schon erwähnt, kann die Umschaltung alternativ erst bei Verlassen des Quaders in mehreren oder bestimmten Merkmalsdimensionen erfolgen. Analoge Überlegungen gelten für den Schaltwechsel zwischen "Ein" und "Aus" bei (Wieder-)Eintritt des Merkmalsvektors in den Quader. Weiterhin ist prinzipiell denkbar, dass die Varianz der Objekte geringer ist als die des Hintergrunds. Dann kann das Vorgehen umgekehrt werden, der Quader steht dann für Anwesenheit beziehungsweise den Schaltzustand "Ein". Die Anwesenheit des Objekts 20 kann auch weiter differenziert werden. Dann werden beispielsweise anhand der mehreren Merkmalsdimensionen hellere und dunklere, größere und kleinere, fernere und nähere, stärker und weniger durchsichtige Objekte oder dergleichen unterschieden.

Die Figuren 4a-b zeigen nochmals eine schematische Darstellung einer Bewertung der Merkmale des Empfangslichtflecks 34 nun in beispielhaft vier Dimensionen, die aus praktischen Gründen paarweise nebeneinander dargestellt sind. In den jeweiligen Teildarstellungen der Figur 4a beziehungsweise 4b wird aus dem Quader der Figur 3 ein Rechteck, im vierdimensionalen Merkmalsraum würden diese Rechtecke gemeinsam einen Hyperquader definieren. In den Figuren 4a-b wurde nicht nur beispielhaft von drei auf vier Merkmalsdimensionen gewechselt, sondern auch eine Hysterese der Umschaltung hinzugefügt.

Es ergibt sich somit ein umgebender Bereich 36 im Merkmalsraum, in dem die Anwesenheit des Objekts 20 festgestellt ist und dementsprechend der Schaltzustand "Ein" angenommen wird. In einem inneren Bereich 38 ist umgekehrt die Abwesenheit des Objekts 20 festgestellt, und es wird der Schaltzustand "Aus" angenommen. Die Grenze dazwischen ist nun zweigeteilt und schließt einen Hysteresebereich 40 ein. Es wird erst an der äußeren Grenze 42 eingeschaltet und an der inneren Grenze 44 ausgeschaltet, um ein schnelles Fehlschalten aufgrund von Rauscheffekten zu vermeiden. Die jeweiligen Grenzwerte können je Merkmalsdimension unabhängig gesetzt werden und somit auch unterschiedliche Hysterese definiert werden. Es ist denkbar, die Grenzen 42, 44 oder auch eine einzige Grenze ohne Hysterese mit einem Sicherheitszuschlag für Driften und Verschmutzung zu setzen oder im Betrieb nach zu führen.

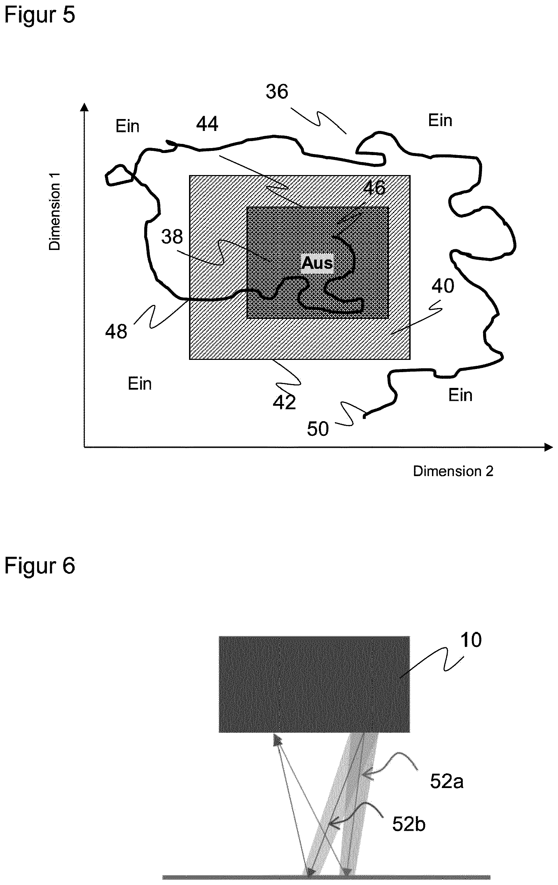

Figur 5 zeigt einen rein beispielhaften Signalverlauf in zwei Merkmalsdimensionen. Am Anfang 46 handelt es sich um ein Hintergrundsignal mit resultierendem Schaltzustand "Aus", das innerhalb der für den Hintergrund erwarteten Varianz schwankt. Das Überschreiten der inneren Grenze 44 führt wegen der gewünschten Hysterese noch nicht zum Umschalten, erst an der äußeren Grenze 42 im Übergang 48 wird erstmalig ein Objekt 20 erkannt und in den Schaltzustand "Ein" gewechselt. Trotz der erheblichen weiteren Schwankungen in beiden Merkmalsdimensionen bleibt das Objekt 20 bis zum hier betrachteten Ende 50 durchgehend als anwesend erkannt.

Figur 6 zeigt ganz schematisch eine weitere Ausführungsform des Sensors 10 mit einem Doppellichtsender, beispielsweise einer Doppel-LED anstelle des einfachen Lichtsenders 12. Die beiden Lichtquellen können alternierend aktiviert werden und führen dann mit ihrem jeweiligen Strahlengang 52a-b zu unterschiedlichen Sende- und Betrachtungswinkeln. Dadurch ändern sich die Eigenschaften des Empfangslichtflecks 34, die Merkmalsdimensionen werden effektiv verdoppelt. Durch weitere Lichtsender ist eine Vervielfachung möglich. Es müssen dabei keineswegs zwangsläufig alle Merkmalsdimensionen berücksichtigt werden.

Figur 7 zeigt eine beispielhafte Aufteilung von Lichtempfangselementen 28 auf Verarbeitungskanäle, die auf die Lage des Empfangslichtflecks 34 ausgerichtet ist. Rein beispielhaft gibt es insgesamt sechs Verarbeitungskanäle. Auf der X-Achse sind die Lichtempfangselemente 28 oder Pixel gemäß ihrer Position auf dem Lichtempfänger 26 aufgetragen, auf der Y-Achse die Energie oder der Pegel in dem jeweiligen Verarbeitungskanal in beliebiger Einheit, wobei dies praktisch beispielsweise durch eine Spannung oder einen Strom gemessen wird.

Einem Zentralkanal 54 ist dasjenige Lichtempfangselement 28 zugeordnet, auf das ein Zentrum des Empfangslichtflecks 34 fällt. Dieses Zentrum kann durch ein statistisches Maß definiert werden, beispielsweise einen Schwerpunkt, einen Median oder ein Maximum der Lichtverteilung über den Empfangslichtfleck 34 in Zeilenrichtung des Lichtempfängers 26. Die Lage des Zentrums soll vorzugsweise besonders genau bestimmt sein, daher ist der Zentralkanal 54 schmal, umfasst bevorzugt nur ein einziges Lichtempfangselement 28. Der Pegel im Zentralkanal 54 ist vergleichsweise gering. Das liegt daran, dass zum Zentralkanal 54 nur wenige Lichtempfangselemente 28 oder sogar nur ein einziges Lichtempfangselement 28 beitragen.

Zu beiden Seiten des Zentralkanals 54 sind ein linker Flankenkanal 56 und ein rechter Flankenkanal 58 vorgesehen. Den Flankenkanälen 56, 58 sind diejenigen Lichtempfangselemente 28 zugeordnet, die den Teil des Empfangslichtflecks 34 links beziehungsweise rechts vom Zentrum erfassen. Diese Zuordnung ist vorzugsweise in dem Sinne vollständig, dass Zentralkanal 54 und Flankenkanäle 56, 58 den gesamten Empfangslichtfleck 34 erfassen. Somit geht kein Nutzlicht verloren. Noch bevorzugter wird genau der Empfangslichtfleck 34 abgedeckt, d.h. den Flankenkanälen ist zudem kein Lichtempfangselement 28 zugeordnet, auf das der Empfangslichtfleck 34 nicht fällt. Dadurch wird das Rauschen begrenzt, denn Lichtempfangselemente 28 außerhalb des Empfangslichtflecks 34 würden nur Hintergrundlicht beitragen. Die Breite der Flankenkanäle 56, 58, also die Anzahl jeweils zugeordneter Lichtempfangselemente 28, kann als Konstante vorgegeben sein. Alternativ hängt die Breite von der Position auf dem Lichtempfänger 26 ab, um den Effekt auszugleichen, dass der Empfangslichtfleck 34 von einem Objekt 20 im Nahbereich größer ist als im Fernbereich. Dieser erwartete Durchmesser des Empfangslichtflecks 34 je nach Objektabstand lässt sich für den Gerätetyp des Sensors 10 vorab berechnen, simulieren oder kalibrieren. Nochmals alternativ kann die Breite dynamisch an den tatsächlichen Empfangslichtfleck 34 angepasst werden. Vorzugsweise sind die Flankenkanäle 56, 58 gleich breit, umfassen also eine gleiche Anzahl von Lichtempfangselementen 28. Das kann auch von der Definition des Zentrums abhängen, wenn dies beispielsweise ein 25%-Quantil ist, werden die Flanken unterschiedlich breit.

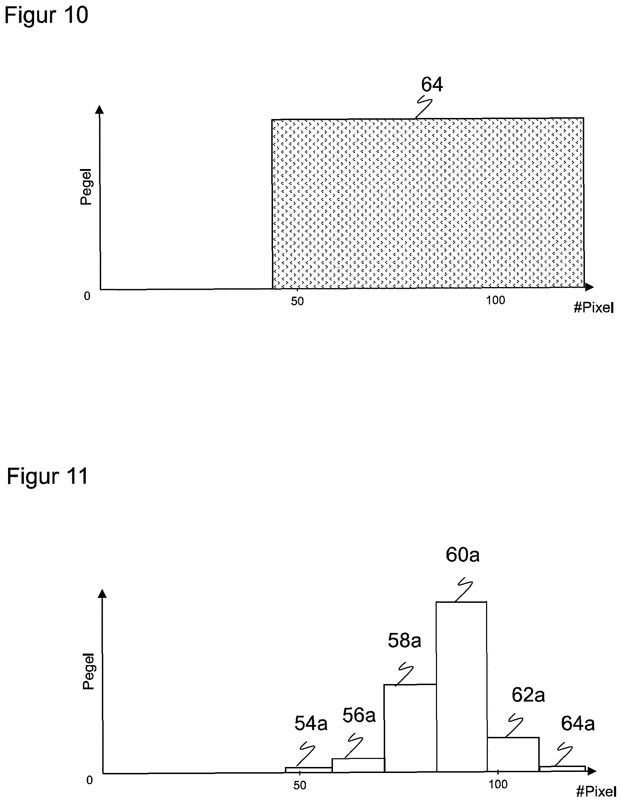

Die übrigen Lichtempfangselemente 28 messen nur den Hintergrund und sind auf die weiteren Verarbeitungskanäle aufgeteilt. In der Darstellung der Figur 3 gibt es rein beispielhaft zu beiden Seiten von Zentralkanal 54 und Flankenkanälen 56, 58 jeweils einen Hintergrundkanal 60, 62 für den Nahbereich und einen Hintergrundkanal 64 für den Fernbereich. Der Hintergrund kann bei der weiteren Auswertung berücksichtigt werden. Sofern in einem Hintergrundkanal 60, 62, 64 ein starker Pegel gemessen wird, ist möglicherweise der Empfangslichtfleck 34 fortgewandert und eine Neuaufteilung der Verarbeitungskanäle erforderlich, wie später unter Bezugnahme auf die Figuren 10 bis 13 erläutert.

In der gezeigten ausgerichteten Situation kann nun anhand der Lichtempfangselemente 28, die Zentralkanal 54 und Flankenkanälen 56, 58 zugeordnet sind, sowie der in diesen Verarbeitungskanälen 54, 56, 58 gemessenen Pegel die Position des Empfangslichtflecks 34 bestimmt werden. Eine schon recht genaue Abschätzung dieser Position bietet schlicht die Identität des Lichtempfangselements 28, das dem Zentralkanal 54 zugeordnet ist. Eine etwas aufwändigere Auswertung, wie sie beispielsweise in der einleitend genannten DE 199 62 701 A1 beschrieben wird, ermöglicht eine noch genauere Positionsbestimmung mit Subpixelauflösung, also sogar mit einer höheren Genauigkeit als der Ausdehnung eines einzelnen Lichtempfangselements 28 in Zeilenrichtung.

Figur 8 zeigt in einer Darstellung ähnlich Figur 7 eine Situation, in der der Empfangslichtfleck 34 etwas nach rechts ausgewandert ist, das Objekt 20 also nun einen etwas grö-ßeren Abstand aufweist. Zentralkanal 54 und Flankenkanäle 56, 58 erfassen zwar gemeinsam noch den Empfangslichtfleck 34, aber das Zentrum des Empfangslichtflecks 34 liegt nicht mehr auf dem Lichtempfangselement 28 des Zentralkanals 54. Die Steuer- und Auswertungseinheit 30 kann dies feststellen, weil der Pegel im rechten Flankenkanal 58 deutlich höher ist als im linken Flankenkanal 56. Zu einem gewissen Grad war dies auch schon in der Situation der Figur 7 der Fall, was dort aber allein dem Diskretisierungseffekt aufgrund der endlichen Ausdehnung der Lichtempfangselemente 28 geschuldet war. In der Situation der Figur 8 ist der Unterschied größer geworden als eine Toleranz, und daran kann die Verschiebung des Empfangslichtflecks 32 erkannt werden.

Um das Zentrum des Empfangslichtflecks 34 wieder dem Zentralkanal 54 zuzuordnen, werden die Verarbeitungskanäle 54, 56, 58 verschoben, ihnen also andere Lichtempfangselemente etwas weiter rechts oder links zugeordnet. Anschaulich werden dazu die Pegel in den Flankenkanälen 56, 58 ausbalanciert. In einem Schritt kann um ein Lichtempfangselement 28 oder um mehrere Lichtempfangselemente 28 verschoben werden. Es sollten nicht mehr Lichtempfangselemente 28 sein als die Breite der Flankenkanäle 56, 58, da sonst das Zentrum und womöglich der gesamte Empfangslichtfleck 34 verfehlt wird. Die Größe des Verschiebungsschritts kann von dem Unterschied im Pegel der beiden Flankenkanäle 56, 58 oder dem Verhältnis abhängig gemacht werden. Es ist denkbar, Verschiebungsschritte zu iterieren oder eine Art Regelung zu implementieren, die den Zentralkanal 54 auf demjenigen Lichtempfangselement 28 hält, auf das das Zentrum des Empfangslichtflecks 34 fällt. Figur 9 zeigt das Ergebnis dieser Nachführung oder Korrektur.

Figur 10 zeigt eine Situation, in der der Empfangslichtfleck 34 vollständig aus dem Zentralkanal 54 und den Flankenkanälen 56, 58 herausgewandert ist. Beispielsweise ist ein neues Objekt 20 in einem anderen Abstand in den Überwachungsbereich 18 eingetreten. Dies ist übertrieben dargestellt, als würde ausschließlich noch im Hintergrundkanal 64 Licht empfangen. In der Realität würden die übrigen Verarbeitungskanäle zumindest noch ein Rauschsignal erzeugen. Jedenfalls kann die Steuer- und Auswertungseinheit 30 anhand eines Pegelvergleichs erkennen, dass die Hauptlichtmenge nun an einer anderen Position empfangen wird, sich der Empfangslichtfleck 34 somit in einer neuen Position befindet und eine Neuaufteilung der Verarbeitungskanäle erforderlich ist.

Um den Empfangslichtfleck 34 innerhalb der in dem Hintergrundkanal 64 zusammengefassten Lichtempfangselemente 28 zu lokalisieren, wird der Hintergrundkanal 64 neu und feiner aufgelöst. Die Lichtempfangselemente 28 des bisherigen Hintergrundkanals 64 werden dafür neu auf die verfügbare Verarbeitungskanäle aufgeteilt.

Figur 11 zeigt das Ergebnis einer Signalaufnahme nach einer beispielhaften gleichmäßigen Neuaufteilung. Statt einer gleichmäßigen Aufteilung könnte eine andere Aufteilung gewählt werden, beispielsweise der zugeordnete Abstandsbereich gleichmäßig aufgeteilt werden, was dann zu unterschiedlichen Breiten der Verarbeitungskanäle führen würde. Die Verarbeitungskanäle 54a, 56a, 58a, 60a, 62a, 64a haben ein neues Bezugszeichen mit hinzugefügtem Buchstaben erhalten und sind nicht gemustert, weil sie sich lediglich den früheren Hintergrundkanal 64 aufteilen und ihre bisherige Bedeutung noch nicht wiedererlangt haben.

Mit den Pegeln in den Verarbeitungskanälen 54a, 56a, 58a, 60a, 62a, 64a kann die Position des Empfangslichtflecks 34 bereits abgeschätzt werden, indem beispielsweise das statistische Maß für das Zentrum berechnet wird. In der Situation der Figur 11 muss das Zentrum irgendwo im linken Teil des Verarbeitungskanals 60a liegen. Damit ist bereits eine grobe Abstandsschätzung möglich.

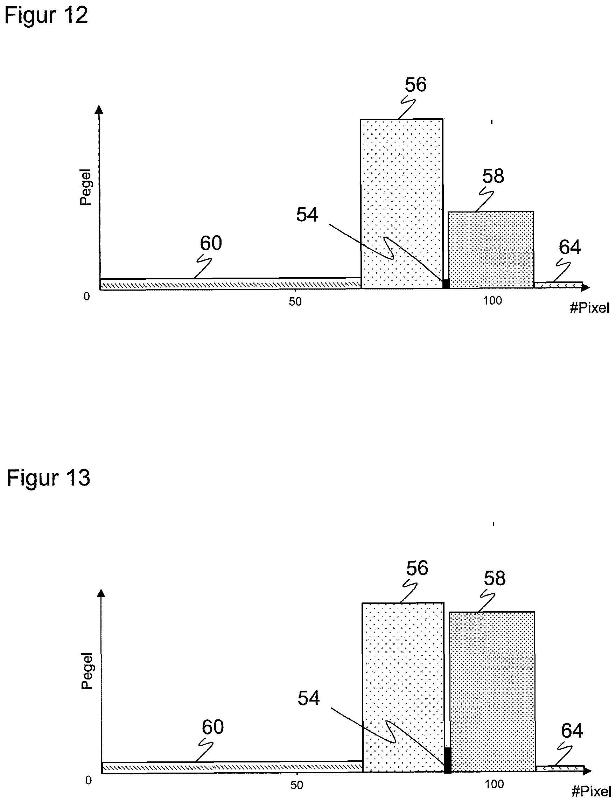

Figur 12 zeigt eine Aufteilung der Verarbeitungskanäle nach Auswertung der Signalaufnahme gemäß Figur 11. Die Verarbeitungskanäle haben ihre Bedeutung bereits wiedererlangt und sind dementsprechend gemustert und mit Bezugszeichen versehen. Da sich der Empfangslichtfleck 34 im Fernbereich befindet, wurde der Hintergrundkanal 62 weggelassen. Das illustriert auch nochmals, dass die Anzahl Hintergrundkanäle beispielhaft zu verstehen ist. Prinzipiell könnten im Übrigen auch die Flankenkanäle 56, 58 nochmals unterteilt werden, aber dadurch wird für eine präzise Positionsbestimmung nichts gewonnen, so dass es bevorzugt bei je genau einem linken Flankenkanal 56 und rechten Flankenkanal 58 bleibt.

Allerdings liegt der Zentralkanal 54 noch etwas zu weit rechts, was sich daran erkennen lässt, dass die Pegel in den Flankenkanälen 56, 58 noch nicht ausbalanciert sind. Mit diesem Zwischenergebnis kann dennoch die erste grobe Abstandsschätzung schon deutlich verbessert werden. Auch ist der Empfangslichtfleck 34 grundsätzlich wiedergefunden, es fehlt lediglich noch eine Feinausrichtung analog zu den Erläuterungen zu Figur 8 und 9. Das kann so ausgedrückt werden, dass das System durch eine Neuinitialisierung wieder in den Regelungsbereich gebracht wurde, wobei die Neuinitialisierung sich auf den Bereich des früheren Hintergrundkanals 64 beschränkt.

Figur 13 zeigt nochmals den eingeregelten Zustand, nachdem durch eine oder mehrere iterierte Verschiebungen von Zentralkanal 54 und Flankenkanälen 56, 58 die Zuordnung des Zentralkanals 54 zu dem Lichtempfangselement 28, auf das das Zentrum des Empfangslichtflecks 34 fällt, wieder hergestellt ist. Der Abstandswert kann jetzt genau ausgegeben werden.

Analog zu dem beschriebenen Wiederfinden des Empfangslichtflecks 34 in dem vormaligen Hintergrundkanal 64 kann der Empfangslichtfleck 34 anfangs, beispielsweise beim Einschalten des Sensors 10, gefunden werden. Die Verarbeitungskanäle teilen sich dann sämtliche Lichtempfangselemente 28 oder einen Arbeitsbereich auf, ansonsten ist der Ablauf wie beschrieben.

Figur 14 zeigt nochmals den Zentralkanal 54 und die beiden Flankenkanäle 56, 58 in einer weiteren beispielhaften Erfassungssituation. Es wird nur ein dem Empfangslichtfleck 34 entsprechender Ausschnitt des Lichtempfängers 26 betrachtet, deshalb sind die Hintergrundkanäle 60, 64 seitlich abgeschnitten. Überlagert sind zudem die Pegel 66 der einzelnen Lichtempfangselemente 28 dargestellt. Anhand dieser Darstellung soll nun näher auf wichtige denkbare Merkmale des Empfangslichtflecks 34 oder Merkmalsdimensionen eingegangen werden, nämlich Position, Energie, Breite und Mehrfachaufspaltung. Vorzugsweise werden einige dieser Merkmale genutzt, insbesondere drei dieser Merkmale oder sogar alle vier Merkmale. Dennoch ist die Aufzählung nicht abschließend, es sind Ausführungsformen möglich, in denen weitere Merkmalsdimensionen hinzukommen.

Die Position des Empfangslichtflecks 34 kann aus der Verteilung der Pegel 66 bestimmt werden, beispielsweise durch den Median. In Kenntnis des Aufbaus des Sensors 10 kann aus der Position nach dem Triangulationsprinzip der Abstand des Objekts 20 bestimmt werden. In einem hintergrundausblendenden Lichttaster können Grenzwerte für den typischen Abstandsbereich des Hintergrunds gesetzt werden, und die Position wird mit diesen Grenzwerten verglichen, um die Merkmalsdimension Position zu bewerten. Werden Lichtempfangselemente 28 in Verarbeitungskanälen zusammengefasst, so kann die Position aus dem Zentralkanal 54 oder mit Subpixelgenauigkeit aus dem Zentralkanal 54 und den Flankenkanälen 56, 58 bestimmt werden.

Die Energie des Empfangslichtflecks 34 ergibt sich durch Aufsummieren der Pegel 66. Werden alle Pegel 66 aufaddiert, so enthält die resultierende Energie einen Hintergrundanteil, der jedoch vergleichsweise gering und im Mittel konstant und somit kompensierbar ist. Alternativ werden die Pegel 66 zuvor mit einer Hintergrundschwelle verglichen, um diejenigen Lichtempfangselemente 28 aufzufinden, auf die der Empfangslichtfleck 34 tatsächlich fällt, und nur hierüber wird dann summiert. Werden Lichtempfangselemente 28 in Verarbeitungskanälen zusammengefasst, so kann über die Verarbeitungskanäle oder selektiv nur über Zentralkanal 54 und Flankenkanäle 56, 58 summiert werden.

Die Breite des Empfangslichtflecks 34 kann wiederum aus der Verteilung der Pegel 66 bestimmt werden. Beispielsweise wird eine Hüllkurve gebildet und die Breite eines Anteils der Hüllkurve bestimmt, die einen Schwellwert durchbricht. Werden Lichtempfangselemente in Verarbeitungskanälen zusammengefasst, so kann die Breite aus Zentralkanal 54 und Flankenkanälen 56, 58 bestimmt werden.

Um dies zu illustrieren, zeigen die Figuren 14 und 15 zum Vergleich einen schmalen Empfangslichtfleck 34 und einen breiteren Empfangslichtfleck 34. Der Median bleibt dabei nahezu gleich, somit ergibt sich eine unveränderte Lage des Zentralkanals 54. Die Pegel jedoch verschieben sich in die Flanken. Ein Maß für die Breite kann somit aus einem Quotienten gefunden werden, in dessen Zähler die Summe der Pegel in Zentralkanal 54 und Flankenkanälen 56, 58 und in dessen Nenner der Pegel des Zentralkanals 54 steht. Ersichtlich wird dieser Wert in Figur 15 wegen der breiter verteilten Energie und des somit im Zentralkanal 54 geringeren Pegels höher.

Die Merkmalsdimension Breite ist gerade bei kritischen Objekten nützlich, wie im Falle einertransparenten Folie vor dem Hintergrund, eines glänzenden, unebenen Objekts mit Umspiegelung oder eines kontrastbehafteten Objekts. Hier kommt es zu einer Spotaufweitung oder Spotverkleinerung, und bei einer Bewertung nur der beiden Merkmalsdimensionen Abstand und Energie käme es zu Fehlern.

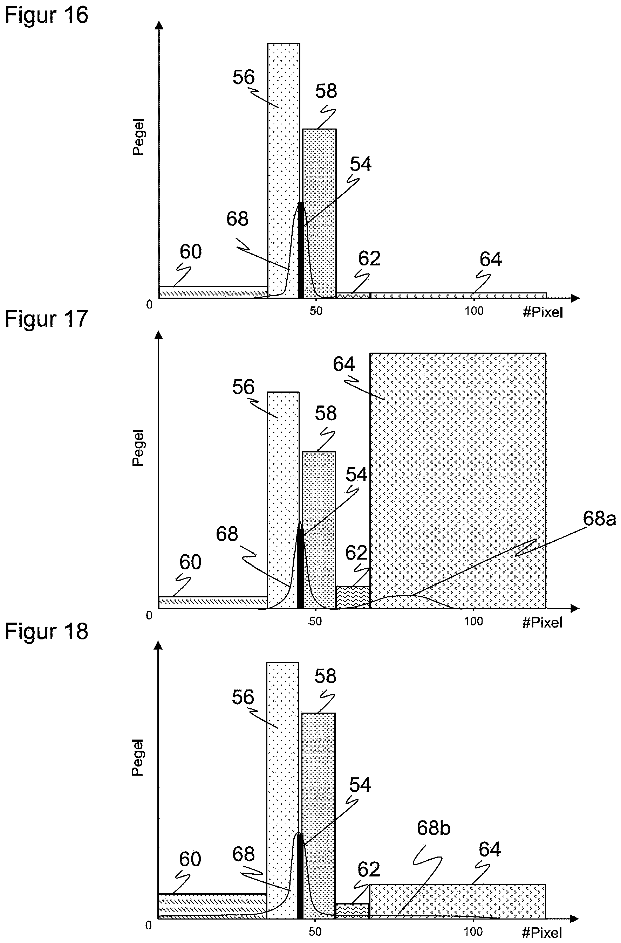

Die Figuren 16 bis 18 illustrieren die Merkmalsdimension Mehrfachaufspaltung oder Multireflex. Glänzende Objekte, wie transparente Folien, können zusätzlich zu dem durch diffuse Streuung erzeugten eigentlichen Empfangslichtfleck einen oder mehrere weitere Reflexe erzeugen. Das äußert sich dann in zusätzlichen oder sekundären Empfangslichtflecken beziehungsweise einer Mehrfachaufspaltung des Empfangslichtflecks 34. anders ausgedrückt wird die Energieverteilung über den Lichtempfänger 26 bimodal oder multimodal.

Figur 16 zeigt eine Vergleichssituation ohne Mehrfachaufspaltung, wobei vereinfachend die einzelnen Pegel der Lichtempfangselemente 28 zu einer Hüllkurve 68 zusammengefasst sind. In Figur 17 kommt es durch einen zusätzlichen Reflex zu einer Mehrfachaufspaltung, die sich in einem Nebenpeak 68a äußert. In Figur 18 ist der zusätzliche Reflex schwächer, erzeugt aber immer noch einen Nebenpeak 68b oberhalb des Rauschpegels.

Die Mehrfachaufspaltung kann unmittelbar in den Pegeln 66 oder Hüllkurven 68 erkannt werden, weil sich dort Nebenpeaks 68a, 68b ausbilden. Werden Lichtempfangselemente 28 in Verarbeitungskanälen zusammengefasst, so verschiebt sich Energie aus dem Zentralkanal 54 und den Flankenkanälen 56, 58 in die Hintergrundkanäle 60, 64. Somit kann eine Mehrfachaufspaltung ebenfalls erkannt werden.

Die Merkmalsdimension Mehrfachaufspaltung oder Multireflex ermöglicht eine weitere Differenzierung und damit höhere Robustheit bei der Erfassung kritischer Objekte. Allein aus dem Hauptpeak bestimmte Merkmale Position und Energie eines diffus remittierenden Objekts und eines glänzenden Objekts könnten ansonsten gleich sein, obwohl die tatsächliche Detektionssituation gar nicht dieselbe ist. Die zusätzliche Bewertung der Mehrfachaufspaltung kann erkennen, dass Energie in Nebenpeaks 68a, 68b verschoben wurde und deshalb einen Fehler vermeiden.

## Patentansprüche

1. Optoelektronischer Sensor (10) zur Erfassung eines Objekts (20) in einem Überwachungsbereich (18), der einen Lichtsender (12) zum Aussenden von Licht (16) in den Überwachungsbereich (18), einen Lichtempfänger (26) mit einer Vielzahl von zu einer Zeile angeordneten Lichtempfangselementen (28) zum Erzeugen eines jeweiligen Empfangssignals aus einem Empfangslichtfleck (34), den das an dem Objekt (20) remittierte Licht (22) auf dem Lichtempfänger (26) erzeugt, wobei Lichtsender (12) und Lichtempfänger (26) eine Triangulationsanordnung bilden, sowie eine Steuer- und Auswertungseinheit (30) aufweist, die dafür ausgebildet ist, aus den Empfangssignalen ein erstes Merkmal und ein zweites Merkmal des Empfangslichtflecks (34) zu bestimmen und zu bewerten, um Anwesenheit oder Abwesenheit des Objekts (20) festzustellen, **dadurch gekennzeichnet,**
**dass** die Steuer- und Auswertungseinheit (30) dafür ausgebildet ist, aus den Empfangssignalen mindestens ein drittes Merkmal des Empfangslichtflecks (34) zu bestimmen und zu bewerten, wobei zunächst jeweils das einzelne Merkmal durch einen Vergleich mit Grenzwerten für die Abwesenheit und/oder Grenzwerten für die Anwesenheit verglichen wird und dann die Bewertungen der einzelnen Merkmale in mehreren Merkmalsdimensionen eines mindestens dreidimensionalen Eigenschaftsraumes mehrheitlich oder einhellig zu einer gemeinsamen Entscheidung über Anwesenheit oder Abwesenheit des Objekts zusammengefasst werden, wobei als Merkmale des Empfangslichtflecks (34) eine Position, eine Energie, eine Breite und/oder eine Mehrfachaufspaltung bestimmt und bewertet werden, und wobei drei der Merkmale oder alle vier Merkmale verwendet werden.

2. Sensor (10) nach Anspruch 1,
wobei die Steuer- und Auswertungseinheit (30) dafür ausgebildet ist, die Grenzwerte durch Erfassen von Empfangssignalen während einer Beobachtung eines Überwachungsbereichs (18) ohne Objekt (20) oder während einer Beobachtung eines Überwachungsbereichs (18) mit verschiedenen Objekten (20) und Bestimmung einer sich während der Beobachtung ergebenden Varianz festzulegen.

3. Sensor (10) nach einem der vorhergehenden Ansprüche,
wobei die Steuer- und Auswertungseinheit (30) dafür ausgebildet ist, die Abwesenheit des Objekts (20) festzustellen, wenn dies die Bewertung für alle Merkmale ergibt, und sonst die Anwesenheit des Objekts (20) festzustellen.

4. Sensor (10) nach einem der vorhergehenden Ansprüche,
wobei die Steuer- und Auswertungseinheit (30) mehrere Verarbeitungskanäle (54, 56, 58, 60, 62, 64) aufweist, in denen jeweils Empfangssignale von einer Gruppe von Lichtempfangselementen (28) zusammengefasst werden.

5. Sensor (10) nach Anspruch 4,
wobei mindestens drei Verarbeitungskanäle (54, 56, 58) vorgesehen sind, nämlich ein Zentralkanal (54), auf dessen zugeordnete Gruppe von Lichtempfangselementen (28) das Zentrum des Empfangslichtflecks (34) fällt, ein rechter Flankenkanal (58), auf dessen zugeordnete Gruppe von Lichtempfangselementen (28) ein rechter Teil des Empfangslichtflecks (34) fällt, sowie ein linker Flankenkanal (56), auf dessen zugeordnete Gruppe von Lichtempfangselementen (28) ein linker Teil des Empfangslichtflecks (34) fällt.

6. Sensor (10) nach Anspruch 5,
wobei der Zentralkanal (54) die höchste Auflösung aufweist, insbesondere die dem Zentralkanal (54) zugeordnete Gruppe von Lichtempfangselementen (28) nur ein einziges Lichtempfangselement (28) aufweist.

7. Sensor (10) nach Anspruch 5 oder 6,
wobei mindestens ein weiterer Verarbeitungskanal (60, 62, 64) vorgesehen ist, nämlich ein Hintergrundkanal, auf dessen zugeordnete Gruppe von Lichtempfangselementen (28) der Empfangslichtfleck (34) nicht fällt.

8. Sensor (10) nach einem der Ansprüche 5 bis 7,
wobei die Steuer- und Auswertungseinheit (30) dafür ausgebildet ist, die Position aus der zugeordneten Gruppe des Zentralkanals (54) zu bestimmen.

9. Sensor (10) nach einem der Ansprüche 4 bis 7,
wobei die Steuer- und Auswertungseinheit (30) dafür ausgebildet ist, die Energie durch Aufsummieren über die Verarbeitungskanäle (54, 56, 58, 60, 62, 64) zu bestimmen, insbesondere Aufsummieren über Zentralkanal (54) und Flankenkanäle (56, 58).

10. Sensor (10) nach einem der Ansprüche 5 bis 7,
wobei die Steuer- und Auswertungseinheit (30) dafür ausgebildet ist, die Breite aus der Summe über Zentralkanal (54) und Flankenkanäle (56, 58) zu bestimmen, insbesondere durch Bildung des Quotienten Summe durch Zentralkanal (54).

11. Sensor (10) nach Anspruch 7,
wobei die Steuer- und Auswertungseinheit (30) dafür ausgebildet ist, eine Mehrfachaufspaltung durch Bewertung eines Hintergrundkanals (60, 62, 64) zu bestimmen.

12. Sensor (10) nach einem der vorhergehenden Ansprüche,
der mindestens einen zusätzlichen Lichtsender (12) aufweist, wobei die Steuer- und Auswertungseinheit (30) dafür ausgebildet ist, die Lichtsender (12) alternativ zu aktivieren, um zusätzliche Merkmale zu erzeugen.

13. Verfahren zum Erfassen eines Objekts (20) in einem Überwachungsbereich (18), bei dem von einem Lichtsender (12) Licht (16) in den Überwachungsbereich (18) ausgesandt und nach Remission an dem Objekt (20) wieder empfangen wird, wobei in einem Lichtempfänger (26) mit einer Vielzahl von zu einer Zeile angeordneten Lichtempfangselementen (28) ein jeweiliges Empfangssignal aus einem Empfangslichtfleck (34) erzeugt wird, den das remittierte Licht (22) auf dem Lichtempfänger (26) erzeugt, wobei Lichtsender (12) und Lichtempfänger (26) eine Triangulationsanordnung bilden und wobei aus den Empfangssignalen ein erstes Merkmal und ein zweites Merkmal des Empfangslichtflecks (34) bestimmt und bewertet werden, um Anwesenheit oder Abwesenheit des Objekts (20) festzustellen,
**dadurch gekennzeichnet,**
**dass** aus den Empfangssignalen mindestens ein drittes Merkmal des Empfangslichtflecks (34) bestimmt und bewertet wird, dass zunächst jeweils das einzelne Merkmal durch einen Vergleich mit Grenzwerten für die Abwesenheit und/oder Grenzwerten für die Anwesenheit verglichen wird und dann die Bewertungen der einzelnen Merkmale in mehreren Merkmalsdimensionen eines mindestens dreidimensionalen Eigenschaftsraumes mehrheitlich oder einhellig zu einer gemeinsamen Entscheidung über Anwesenheit oder Abwesenheit des Objekts zusammengefasst werden, dass als Merkmale des Empfangslichtflecks (34) eine Position, eine Energie, eine Breite und/oder eine Mehrfachaufspaltung bestimmt und bewertet werden, und drei der Merkmale oder alle vier Merkmale verwendet werden.

## Claims

1. An optoelectronic sensor (10) for detecting an object (20) in a monitoring area (18), comprising a light transmitter (12) for transmitting light (16) into the monitoring area (18), a light receiver (26) having a plurality of light receiving elements (28) arranged in a line for generating a respective reception signal from a reception light spot (34) that the remitted light (22) remitted at the object (20) generates on the light receiver (26), the light transmitter (12) and light receiver (26) forming a triangulation arrangement, and a control and evaluation unit (30) configured to determine and evaluate a first feature and a second feature of the received light spot (34) from the received signals in order to determine the presence or absence of the object (20)
**characterized in that** the control and evaluation unit (30) is configured to determine and evaluate at least a third feature of the received light spot (34) from the received signals, the individual feature in each case first being compared by means of a comparison with limit values for the absence and/or limit values for the presence, and the evaluations of the individual features in a plurality of feature dimensions of an at least three-dimensional property space then being combined by majority or unanimity to form a common decision on the presence or absence of the object, wherein a position, an energy, a width and/or a multiple splitting are determined and evaluated as features of the receiving light spot (34), and wherein three of the features or even all four features are used.

2. The sensor (10) according to claim 1,
wherein the control and evaluation unit (30) is configured to determine the limit values by detecting received signals during an observation of a monitoring area (18) without an object (20) or during an observation of a monitoring area (18) with different objects (20) and determining a variance resulting during the observation.

3. The sensor (10) according to any of the preceding claims,
wherein the control and evaluation unit (30) is configured to determine the absence of the object (20) if this results in the evaluation for all features, and otherwise to determine the presence of the object (20).

4. The sensor (10) according to any of the preceding claims,
wherein the control and evaluation unit (30) comprises a plurality of processing channels (54, 56, 58, 60, 62, 64) in each of which received signals from a group of light receiving elements (28) are combined.

5. The sensor (10) according to claim 4,
wherein at least three processing channels (54, 56, 58) are provided, namely a central channel (54) on whose associated group of light receiving elements (28) the center of the received light spot (34) falls, a right flanking channel (58) on whose associated group of light receiving elements (28) a right part of the received light spot (34) falls, and a left flank channel (56) on whose associated group of light receiving elements (28) a left part of the received light spot (34) falls.

6. The sensor (10) according to claim 5,
wherein the central channel (54) has the highest resolution, in particular the group of light receiving elements (28) associated with the central channel (54) has only a single light receiving element (28).

7. The sensor (10) according to claim 5 or 6,
wherein at least one further processing channel (60, 62, 64) is provided, namely a background channel, on whose associated group of light receiving elements (28) the receiving light spot (34) does not fall.

8. The sensor (10) according to any of claims 5 to 7,
wherein the control and evaluation unit (30) is configured to determine the position from the associated group of the central channel (54).

9. The sensor (10) according to any of claims 4 to 7,
wherein the control and evaluation unit (30) is configured to determine the energy by summing over the processing channels (54, 56, 58, 60, 62, 64), in particular summing over central channel (54) and flank channels (56, 58).

10. The sensor (10) according to any of claims 5 to 7,
wherein the control and evaluation unit (30) is configured to determine the width from the sum over central channel (54) and flank channels (56, 58), in particular by forming the quotient of sum by central channel (54).

11. The sensor (10) according to claim 7,
wherein the control and evaluation unit (30) is configured to determine a multiple split by evaluating a background channel (60, 62, 64).

12. The sensor (10) according to any of the preceding claims,
comprising at least one additional light transmitter (12), wherein the control and evaluation unit (30) is configured to alternatively activate the light transmitters (12) to generate additional features.

13. A method for detecting an object (20) in a monitoring area (18),wherein light (16) is transmitted from a light transmitter (12) into the monitoring area (18) and is received again after remission at the object (20), wherein a respective received signal is generated in a light receiver (26) having a plurality of light receiving elements (28) arranged in a line from a received light spot (34) that the remitted light (22) generates on the light receiver (26), the light transmitter (12) and light receiver (26) forming a triangulation arrangement, and a first feature and a second feature of the received light spot (34) being determined and evaluated from the received signals in order to determine the presence or absence of the object (20)
**characterized in that** at least a third feature of the received light spot (34) is determined and evaluated from the received signals, **in that** first in each case the individual feature is compared by means of a comparison with limit values for the absence and/or limit values for the presence, and then the evaluations of the individual features in a plurality of feature dimensions of an at least three-dimensional property space are combined by majority or unanimity to form a common decision on the presence or absence of the object, **in that** a position, an energy, a width and/or a multiple splitting are determined and evaluated as features of the receiving light spot (34), and three of the features or all four features are used.

## Revendications

1. Capteur optoélectronique (10) pour la détection d'un objet (20) dans une zone de surveillance (18), comprenant un émetteur de lumière (12) pour l'émission de la lumière (16) dans la zone de surveillance (18), un récepteur de lumière (26) avec une pluralité d'éléments de réception de lumière (28) disposés en ligne pour générer un signal de réception respectif à partir d'une tache lumineuse de réception (34) que la lumière (22) réémise sur l'objet (20) génère sur le récepteur de lumière (26), l'émetteur de lumière (12) et le récepteur de lumière (26) formant un dispositif de triangulation, ainsi qu'une unité de commande et d'évaluation (30) configurée pour déterminer et évaluer une première caractéristique et une deuxième caractéristique de la tache lumineuse de réception (34) à partir des signaux de réception afin de déterminer la présence ou l'absence de l'objet (20)
**caractérisé en ce que** l'unité de commande et d'évaluation (30) est configurée pour déterminer et évaluer au moins une troisième caractéristique de la tache lumineuse de réception (34) à partir des signaux de réception, chaque caractéristique individuelle est d'abord comparée à des valeurs limites pour l'absence et/ou à des valeurs limites pour la présence, et les évaluations des caractéristiques individuelles dans plusieurs dimensions de caractéristiques d'un espace de propriétés au moins tridimensionnel sont ensuite regroupées à la majorité ou à l'unanimité en une décision commune sur la présence ou l'absence de l'objet, dans laquelle une position, une énergie, une largeur et/ou une division multiple sont déterminées et évaluées en tant que caractéristiques de la tache lumineuse de réception (34), et dans laquelle trois des caractéristiques ou les quatre caractéristiques, sont utilisées.

2. Capteur (10) selon la revendication 1,
dans lequel l'unité de commande et d'évaluation (30) est configurée pour déterminer les valeurs limites en détectant les signaux de réception pendant une observation d'une zone de surveillance (18) sans objet (20) ou pendant une observation d'une zone de surveillance (18) avec différents objets (20) et en déterminant une variance résultant de l'observation.

3. Capteur (10) selon l'une des revendications précédentes,
dans lequel l'unité de commande et d'évaluation (30) est configurée pour déterminer l'absence de l'objet (20) si cela résulte de l'évaluation de toutes les caractéristiques, et sinon pour déterminer la présence de l'objet (20).

4. Capteur (10) selon l'une des revendications précédentes,
dans lequel l'unité de commande et d'évaluation (30) comprend plusieurs canaux de traitement (54, 56, 58, 60, 62, 64) dans lesquels sont respectivement regroupés des signaux de réception d'un groupe d'éléments de réception de lumière (28).

5. Capteur (10) selon la revendication 4,
dans lequel au moins trois canaux de traitement (54, 56, 58) sont prévus, à savoir un canal central (54) sur le groupe associé d'éléments de réception de lumière (28) duquel tombe le centre de la tache lumineuse de réception (34), un canal de flanc droit (58) sur le groupe associé d'éléments de réception de lumière (28) duquel tombe une partie droite de la tache lumineuse de réception (34), ains qu'un canal de flanc gauche (56) sur le groupe associé d'éléments de réception de lumière (28) duquel tombe une partie gauche de la tache lumineuse de réception (34).

6. Capteur (10) selon la revendication 5,
dans lequel le canal central (54) présente la résolution la plus élevée, en particulier le groupe d'éléments de réception de lumière (28) associé au canal central (54) ne présente qu'un seul élément de réception de lumière (28).

7. Capteur (10) selon la revendication 5 ou 6,
dans lequel au moins un autre canal de traitement (60, 62, 64) est prévu, à savoir un canal d'arrière-plan, sur le groupe associé d'éléments de réception de lumière (28) duquel la tache lumineuse de réception (34) ne tombe pas.

8. Capteur (10) selon l'une des revendications 5 à 7,
dans lequel l'unité de commande et d'évaluation (30) est configurée pour déterminer la position à partir du groupe associé du canal central (54).

9. Capteur (10) selon l'une des revendications 4 à 7,
dans lequel l'unité de commande et d'évaluation (30) est configurée pour déterminer l'énergie en additionnant sur les canaux de traitement (54, 56, 58, 60, 62, 64), en particulier en additionnant du canal central (54) et des canaux de flanc (56, 58).

10. Capteur (10) selon l'une des revendications 5 à 7,
dans lequel l'unité de commande et d'évaluation (30) est configurée pour déterminer la largeur à partir de la somme sur le canal central (54) et des canaux de flanc (56, 58), en particulier en formant le quotient de la somme par le canal central (54).

11. Capteur (10) selon la revendication 7,
dans lequel l'unité de commande et d'évaluation (30) est configurée pour déterminer une division multiple en évaluant un canal d'arrière-plan (60, 62, 64).

12. Capteur (10) selon l'une des revendications précédentes,
comprenant au moins un émetteur de lumière supplémentaire (12), dans lequel l'unité de commande et d'évaluation (30) est configurée pour activer alternativement les émetteurs de lumière (12) afin de générer des caractéristiques supplémentaires.

13. Procédé de détection d'un objet (20) dans une zone de surveillance (18), dans lequel la lumière (16) est émise par un émetteur de lumière (12) dans la zone de surveillance (18) et est reçue à nouveau après rémission sur l'objet (20), dans lequel un signal de réception respectif est généré dans un récepteur de lumière (26) avec une pluralité d'éléments de réception de lumière (28) disposés en ligne à partir d'une tache lumineuse de réception (34) que la lumière réémise (22) génère sur le récepteur de lumière (26), l'émetteur de lumière (12) et le récepteur de lumière (26) formant un dispositif de triangulation, et dans lequel une première caractéristique et une deuxième caractéristique de la tache lumineuse de réception (34) sont déterminées et évaluées à partir des signaux de réception afin de déterminer la présence ou l'absence de l'objet (20) **caractérisé en ce qu'**au moins une troisième caractéristique de la tache lumineuse de réception (34) est déterminée et évaluée à partir des signaux de réception, chaque caractéristique individuelle est d'abord comparée à des valeurs limites pour l'absence et/ou à des valeurs limites pour la présence, et les évaluations des caractéristiques individuelles dans plusieurs dimensions de caractéristiques d'un espace de propriétés au moins tridimensionnel sont ensuite regroupées à la majorité ou à l'unanimité en une décision commune sur la présence ou l'absence de l'objet, dans laquelle une position, une énergie, une largeur et/ou une division multiple sont déterminées et évaluées en tant que caractéristiques de la tache lumineuse de réception (34), et dans laquelle trois des caractéristiques ou les quatre caractéristiques, sont utilisées.
